(19) **Europäisches Patentamt / European Patent Office / Office européen des brevets**

(11) **EP 2 270 781 A1**

(12) # EUROPEAN PATENT APPLICATION
published in accordance with Art. 153(4) EPC

(43) Date of publication:
**05.01.2011 Bulletin 2011/01**

(21) Application number: **09726161.4**

(22) Date of filing: **26.03.2009**

(51) Int Cl.:
**G11B 7/0045** (2006.01)   **G11B 7/004** (2006.01)
**G11B 7/125** (2006.01)

(86) International application number:
**PCT/JP2009/056848**

(87) International publication number:
**WO 2009/119902 (01.10.2009 Gazette 2009/40)**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **27.03.2008 JP 2008082369**

(71) Applicant: **Taiyo Yuden Co., Ltd.**
**Tokyo 110-0005 (JP)**

(72) Inventor: **KAKIMOTO, Hiroya**
**Tokyo 110-0005 (JP)**

(74) Representative: **Jackson, Richard Eric**
**Carpmaels & Ransford**
**One Southampton Row**
**London**
**WC1B 5HA (GB)**

(54) **DATA RECORDING EVALUATING METHOD AND OPTICAL DISK RECORDING AND REPRODUCING DEVICE**

(57)   A novel evaluation index is introduced so as to allow both a total evaluation of data recording and an evaluation of individual detection patterns. A data recording evaluation method includes a step of reproducing the result of data recording performed on an optical disk and identifying a predetermined detection pattern in a reproduction signal, a step of detecting the signal state of the reproduction signal corresponding to the predetermined detection pattern, and a first calculation step of calculating a first recording state evaluation index value based on the detected signal state and a reference condition which is identified from the predetermined detection pattern and adjusted so as to reflect the signal state of the reproduction signal. When there is a plurality of predetermined detection patterns, the method further includes a second calculation step of calculating a second recording state evaluation index value using the first recording state evaluation index value for each of the predetermined detection patterns. Data recording can be evaluated properly using the first and second recording state evaluation index values.

Fig. 24

EP 2 270 781 A1

**Description**

Technical Field

The present invention relates to a technique for evaluation of data recording on an optical disk.

Background Art

In recent years, with the advent of high-definition TV, digital images or the like can be recorded with high density and for a longer period. As an optical recording information medium meeting this demand, an optical recording information medium (hereinafter referred to as an "optical disk"), such as a write-once type HD-DVD (hereinafter referred to as "HD-DVD-R") or a write-once type Blue-ray disc (hereinafter referred to as "BD-R"), has been developed. This optical disk has a structure in which a recording layer, a reflective layer, and a protective layer are formed on one principal surface of an optical transparency disk substrate. Moreover, spiral or concentric-circle grooves are formed on the surface of the substrate on which the recording layer and the reflective layer are formed, and a portion between adjacent grooves is formed to be a convex portion called a land. In such an optical disk, recording is performed by irradiating the recording layer over the grooves with a recording laser beam so as to cause the beam to track along the grooves using a recording and reproduction device for optical disk and forming recording pits (hereinafter referred to as "marks") on the recording layer so as to be replaced with symbols. Reproduction is performed by irradiating an array formed by such marks having a length nT (T is a bit length between reference channel clocks, and nT is an integral multiple of n of the bit length) and portions having a length of nT (hereinafter referred to as "spaces") between the marks with a laser beam for reproduction and converting reflected light into symbols of a reproduction signal.

In the optical disk, a high recording density type optical disk system such as the HD-DVD standard or the Blue-ray disk standard (hereinafter referred to as "BD standard") is established. The important demands in these high recording density techniques are higher recording capacity and faster signal processing. Meeting these demands causes another problem. The problem concerns the SN ratio and the inter-symbol interference. This problem takes place because the beam diameter of a laser beam for reading is larger than the size of isolated pits when reading recorded pits using an optical head. To solve these problems, a signal processing method called partial response maximum likelihood (hereinafter simply referred to as "PRML") is proposed which is appropriate for reproduction of high recording density information. The PRML method is a method in which the characteristics of partial response (simply referred to as "PR"), which is a reproduction technique based on the presumption that inter-symbol interference is present, are combined with a maximum likelihood (hereinafter simply referred to as "ML") technique which selectively combines the most probable signal series among reproduction signals. Further, the PRML method is to perform reproduction using energy of a signal voltage at channel clock positions of adjacent signals without performing excessive waveform equalization in order to remove inter-symbol interference. In such a PRML technique, various techniques for evaluating data recording and optimizing the recording conditions and reproduction conditions based on the evaluation results are proposed.

For example, JP-A-2003-151219 discloses a technique relating to the evaluation of quality of a reproduction signal. Specifically, the technique utilizes a predetermined reproduction signal, a first pattern, which corresponds to a signal waveform pattern of the reproduction signal, and an arbitrary pattern (a second or third pattern), which is different from the first pattern and which corresponds to the signal waveform pattern of the reproduction signal. First, a difference $D=Ee-Eo$ between a distance $Eo$ between the reproduction signal and the first pattern and a distance $Ee$ between the reproduction signal and the arbitrary pattern is calculated. Subsequently, a distribution of such distance differences $D$ is calculated for a plurality of samples of reproduction signals. After that, a quality evaluation parameter ($M/\sigma$) for reproduction signals is determined based on the ratio of the mean $M$ of the calculated distance differences $D$ to the standard deviation $\sigma$ of the distribution of the calculated distance differences $D$. Then, the quality of the reproduction signals is judged from an evaluation index value (Mgn) represented by the quality evaluation parameter.

Moreover, JP-A-2003-141823 discloses a technique for evaluating the quality of a signal based on an index, which enables the error rate of a binarization result obtained using maximum likelihood decoding to be estimated appropriately. Specifically, the technique relates to a maximum likelihood decoding method in which a most probable state transition path of a decoded signal is estimated from n (n is an integer of 2 or larger) state transition paths, in which the decoded signal can have plural states at arbitrary time point k (k is an arbitrary integer), the decoded signal transitioning its state in accordance with a state transition rule such that the decoded signal can transition from a state at time point k-j (j is an integer of 2 or larger) to the state at time point k along n state transition paths. If it is assumed that the reliability of the results of decoding from time point k-j to time point k is |PA-PB| where PA is the probability of a state transition from the state at time point k-j to the state at time point k along the most probable state transition path among the n state transition paths, and PB is the probability of a state transition from the state at time point k-j to the state at time point k along the next most probable state transition path among the n state transition paths, by calculating the value of |PA-PB| for a predetermined period of time or a predetermined number of times to calculate a variation thereof, it is possible to obtain an index indicating the quality of a signal which is correlated with the error rate of the binarization result obtained using the maximum likelihood decoding.

In addition, JP-A-2002-197660 discloses a recording state detection technique which enables channel-adaptive detection of a recording state when reproducing information recorded in a high density using a Viterbi detector. Specifically, after a reproduction signal read from a disk device is corrected by a band-limiting filter and an equalizer so as to have specific channel characteristics, the signal is read as a digital signal xi by an A/D converter in time with a synchronous clock generated by a PLL circuit. The digital signal xi is input to the Viterbi detector to obtain a Viterbi detection output signal. The Viterbi detection output is input to a reference level judgment device and an error margin calculation circuit. The error margin calculation circuit calculates a difference $E_i$ between the digital signal xi and the Viterbi detection output and outputs the difference to a recording state detecting circuit. The recording state detecting circuit detects the amplitude or the amplitude level and asymmetry of the difference using an output from the reference level judgment device and outputs detection information.

As a technique relating to a reference signal using maximum likelihood decoding, JP-A-2005-267759 discloses an invention in which only the peak and bottom signal levels of each of the shortest symbol (3T) and the longest symbol (11T) of a recording bit in an RF reproduction equalization signal are detected and calculated for each symbol (2T to 11T) as Viterbi expectations, and the signals are supplied to a maximum likelihood decoding circuit, thus executing a branch metric operation.

Furthermore, a system in which an output signal of a Viterbi detection circuit is passed through a demultiplexer, and a signal of a reference level is supplied from an adaptation table to a Viterbi detector is disclosed in IEEE' 2002 paper titled "Adaptive Partial-Response Maximum-Likelihood Detection in Optical Recording Media". In this adaptation table, a method of creating a corresponding reference table for each of 10 kinds of binary signals is described.

Citation List

> Patent Literature 1: JP-A-2003-151219
> Patent Literature 2: JP-A-2003-141823
> Patent Literature 3: JP-A-2002-197660
> Patent Literature 4: JP-A-2005-267759
> Non Patent Literature: Conference title 2002 International Symposium on Optical Data Topical Meeting. Joint International Symposium Technical Digest (Cat. No. 02EX552) p. 269-271 "Adaptive Partial-Response Maximum-Likelihood Detection in Optical Recording Media"

SUMMARY OF THE INVENTION

Technical Problems

According to recent PRML techniques, a reproduction signal is equalized to predetermined PR characteristics using a waveform equalizer. Since it is not possible to obtain optimal characteristics if the equalized signal is fixed as a reference signal, various techniques are proposed for variably optimizing the equalized signal so as to follow changes in an RF reproduction signal (hereinafter referred to simply as "reproduction signal"). That is, a technique is known which is called "adaptive PRML" in which a target signal level serving as a reference for evaluation is changed in accordance with the level of a detected reproduction signal. In the techniques for evaluating data recording disclosed in Patent Literature Nos. 1 to 3, an evaluation method compliant with the adaptive PRML is not disclosed. Moreover, although the techniques disclosed in Patent Literature 4 and Non-Patent Literature disclose an evaluation method compliant with the adaptive PRML, an evaluation of data recording for individual record patterns is not always appropriately correlated with a total evaluation of data recording.

It is, therefore, an object of the present invention to provide a technique in which a novel evaluation index compliant with adaptive PRML is introduced so as to enable a total evaluation of data recording, thus reducing reproduction errors.

Another object of the present invention is to provide a technique in which a novel evaluation index compliant with adaptive PRML is introduced so as to enable an appropriate evaluation of individual record patterns, thus reducing reproduction errors.

Another object of the present invention is to provide a technique which complies with adaptive PRML and enables appropriate correlation between a total evaluation of data recording and an evaluation of data recording for individual record patterns, thus reducing reproduction errors.

Another object of the present invention is to provide a technique in which recording conditions or recording parameters are appropriately adjusted based on an evaluation of data recording compliant with adaptive PRML, thus reducing reproduction errors.

Solutions to Problems

A method of evaluating data recording according to the present invention includes the steps of reproducing data recorded on an optical disk and detecting a predetermined pattern from the reproduced signal; detecting a signal condition of the reproduced signal that corresponds to the predetermined pattern; and a first calculation step of calculating a first recording state evaluation index value-for example, PRerrot_ptn(p) in the disclosed embodiments—based on the detected signal condition and a reference condition, which is specified by the predetermined pattern and adjusted to reflect the signal condition.

By calculating this first recording state evaluation index value, it is possible to determine whether proper data recording is conducted in a relation with the reference condition regarding a predetermined pattern. That is, appropriate evaluation is possible for each of recording patterns.

Further, where there is a plurality of the predetermined patterns, the prevent invention may further include a second calculation step of calculating a second recording state evaluation index value—for example, PRerror_ttl in the disclosed embodiments—using the first recording state evaluation index value for each of the predetermined patterns. By calculating the second recording state evaluation index value this way, it is possible to evaluate data recording for a variety of recording patterns as a whole.

Further, the present invention may further include a first modification step of modifying a data recording condition for data recording—for example, a condition for oscillation directions of the recording waveforms—based on the second recording state evaluation index value. This way, it is possible to properly and comprehensively adjust the recording conditions for data recording based on the second recording state evaluation index value.

Furthermore, the second calculation step may include the step of calculating, for each of the predetermined patterns, a product of an occurrence probability and the first recording state evaluation index, and calculating a total sum of each of the calculated products to calculate the second recording state evaluation index value. This is for the purpose of putting larger weighting factors to the patterns that appear more frequently so that the second recording state evaluation index value reflects their total influences on data recording.

Further, the present invention may further include the steps of judging whether or not the second recording state evaluation index value has exceeded a predetermined threshold; and identifying the predetermined pattern that has a predetermined or greater influence level on the second recording state evaluation index value—for example, the one that has a value exceeding a predetermined value or upper predetermined number of units—based on the corresponding first recording state evaluation index value when the second recording state evaluation index value has exceeded the predetermined threshold. This way, it is possible to identify problematic patterns.

Further, the present invention may further include a second modification step of modifying a recoding parameter used for data recording—for example, parameters in the time axis direction of the recording waveform (dTrop2T, etc.) —based on the first recording state evaluation index value relating to the identified pattern. This way, adjustment of recording parameters can be effectively performed.

Here, the above-mentioned predetermined patterns may be made of at least one mark and one space.

Further, the predetermined pattern may be a pattern the occurrence probability of which exceeds a predetermined value. If the occurrence probability is very small, such a pattern may be removed from patterns to be processed in order to reduce the processing load.

Moreover, the first modification step may include the step of specifying the recording condition under which the second recording state evaluation index value assumes the most preferable value, based on a relation between recording conditions and the second recording state evaluation index value calculated based on the condition of a signal obtained by reproduction of data recorded under the recording conditions. For example, the most preferable recording conditions for data recording can be specified before start recording data in this way.

Further, the second modification step may include the step of calculating a modification amount of the recording condition at a point in time, using a relation between recording conditions and the second recording state evaluation index value calculated based on the condition of a signal obtained by reproduction of data recorded under the recording conditions and using the second recording state evaluation index value at the point in time. Thus, in adjusting the recoding conditions during the data recording, the second recording state evaluation index value can be used.

Here, a relation between the recording conditions and the second recording state evaluation index value calculated based on the condition of a signal obtained by reproduction of data recorded under the recording conditions can correspond to data obtained at the time of a test recording. During a test recording, the second recording state evaluation index value can be calculated for each of the cases set by varying recording conditions.

Further, the second modification step may include the step of specifying the recording parameter under which the first recording state evaluation index value assumes a most preferable value, based on a relation between the recording condition and the first recording state evaluation index value calculated based on the condition of a signal obtained by reproduction of data recorded under the recording condition.

Furthermore, the second modification step may include the step of calculating a modification amount for the recording parameter at a point in time, using a relation between the recording parameter and the first recording state evaluation index value calculated based on the condition of a signal obtained by reproduction of data recorded with the recording parameters and using the first recording state evaluation index value at that point in time.

Further, a relation between recording parameters and the first recording state evaluation index value calculated based on the condition of a signal obtained by reproduction of data recorded with the recording parameters may correspond to data obtained at a time of a test recording.

Further, the aforementioned first calculation step may include the step of calculating the amount of a difference between the detected signal condition and a reference condition, which is specified by the predetermined pattern and adjusted to reflect the signal condition. This way, the present invention can be sufficiently adapted to systems using the adaptive PRML signal processing method-i.e., systems conforming to the BD standard or the HD-DVD standard.

Further, the aforementioned first calculation step may include the step of setting each level of target levels based on the signal condition of the reproduced signal; the step of adjusting the reference condition specified by the predetermined pattern in accordance with adaptive changes in the target levels; and the step of calculating an amount of a difference between the signal condition detected and the reference condition.

A recording and reproduction device for optical disk according to the present invention includes means for reproducing data recorded on an optical disk and detecting a predetermined pattern from the reproduced signal; means for detecting a signal condition of the reproduced signal that corresponds to the predetermined pattern; and means for calculating a first recording state evaluation index value based on the detected signal condition and a reference condition, which is specified by the predetermined pattern and adjusted to reflect the signal condition of the reproduced signal.

Here, when there is a plurality of the predetermined patterns, the device may further include second calculation means for calculating a second recording state evaluation index value using the first recording state evaluation index value for each of the predetermined patterns.

Further, a recording and reproduction device for optical disk according to the present invention may further include first modification means for modifying a data recording condition for data recording based on the second recording state evaluation index value.

Moreover, the second calculation means may calculate, for each of the predetermined patterns, a product of an occurrence probability and the first recording state evaluation index, and may calculate a total sum of each of the calculated products to calculate the second recording state evaluation index value.

Further, a recording and reproduction device for optical disk according to the present invention may further include means for judging whether or not the second recording state evaluation index value has exceeded a predetermined threshold; and means for identifying the predetermined pattern that has a predetermined or greater influence level on the second recording state evaluation index value based on the corresponding first recording state evaluation index value when the second recording state evaluation index value has exceeded the predetermined threshold.

Further, a recording and reproduction device for optical disk according to the present invention may further include second modification means for modifying a recoding parameter used for data recording based on the first recording state evaluation index value relating to the identified pattern.

A first optical information recording medium according to the present invention stores a threshold value for a second recording state evaluation index value that is calculated by: calculating a product of a first recording state evaluation index value and an occurrence probability of a predetermined pattern, the first recording state evaluation index corresponding to a difference between signal condition of a reproduced signal that corresponds to the predetermine pattern and a reference condition that is specified by the predetermined pattern and adjusted to reflect the signal condition of the reproduced signal; and by calculating a total sum of the calculated products.

A second optical information recording medium according to the present invention stores data representing a relation between a second recording state evaluation index value and recording conditions for data from which the second recording state evaluation index value is calculated, the second recording state evaluation index value being calculated by: calculating a product of a first recording state evaluation index value and an occurrence probability of a predetermined pattern, the first recording state evaluation index corresponding to a difference between a signal condition of a reproduced signal that corresponds to the predetermine pattern and a reference condition that is specified by the predetermined pattern and adjusted to reflect the signal condition of the reproduced signal; and calculating a total sum of the calculated products.

A third optical information recording medium according to the present invention stores data representing a relation between a recording state evaluation index value and recording parameters for data from which the recording state evaluation index value is calculated, the recording state evaluation index corresponding to a difference between a signal condition of a reproduced signal that corresponds to a predetermine pattern and a reference condition that is specified by the predetermined pattern and adjusted to reflect the signal condition of the reproduced signal.

A program for causing a processor to execute the data recording evaluation method according to the present invention may be created. The program may be stored in, for example, an optical disk, such as a flexible disk or CD-ROM, a magneto-optical disk, a storage medium or storage device such as a semiconductor memory or hard disk, or a nonvolatile memory of a processor. The program may be distributed in the form of digital signals through a network. Data under processing may be temporarily stored in a storage device, such as the memory of a processor.

Advantageous Effects of the Invention

According to the present invention, it is possible to make a total evaluation of data recording by introducing a novel evaluation index compliant with adaptive PRML and reduce reproduction errors.

According to another aspect of the present invention, it is possible to make an appropriate evaluation of individual record patterns by introducing a novel evaluation index compliant with adaptive PRML and reduce reproduction errors.

According to another aspect of the present invention, it is possible to enable appropriate correlation between a total evaluation of data recording and an evaluation of data recording for individual record patterns in compliance with adaptive PRML and reduce reproduction errors.

According to another aspect of the present invention, it is possible to make an appropriate adjustment of recording conditions or recording parameters based on an evaluation of data recording compliant with adaptive PRML, thus reducing reproduction errors.

BRIEF DESCRIPTION OF THE DRAWINGS

FIG. 1 is a diagram showing transitions of an amplitude level with time.
FIG. 2 is a diagram showing the relationship between record patterns and occurrence probabilities.
FIG. 3 is a diagram showing the relationship between effective patterns, PRerror_ttl, and pattern effective rate.
FIG. 4 is a diagram showing the relationship between recording power, DCJ, and PRerror_ttl.
FIG. 5 is a diagram showing the relationship between recording power, SER, and PRerror_ttl.
FIG. 6 is a diagram showing the relationship between recording parameter dTtop2T, SER, and PRerror_ttl.
FIG. 7 is a diagram showing changes in PRerror_ptn(p) when a record pattern is changed.
FIG. 8 is a diagram showing changes in PRerror_ptn(p) when a record pattern is changed.
FIG. 9 is a diagram showing changes in PRerror_ptn(p) when a record pattern is changed.
FIG. 10 is a diagram showing changes in PRerror_ptn(p) when a record pattern is changed.
FIG. 11 is a diagram illustrating a target level when PR(1,2,2,1) is used.
FIG. 12 is a diagram illustrating the change of a target level.
FIG. 13 is a diagram illustrating the calculation of a target level.
FIG. 14 is a flowchart showing the steps of an adaptive target level setting process.
FIG. 15 is a diagram showing changes in PRerror_ptn(p) when a target level is changed.
FIG. 16 is a diagram showing changes in PRerror_ptn(p) when a target level is changed.
FIG. 17 is a diagram showing changes in PRerror_ptn(p) when a target level is changed.
FIG. 18 is a diagram showing changes in PRerror_ptn(p) when a target level is changed.
FIG. 19 is a diagram illustrating the difference in PRerror_ttl between general PRML and adaptive PRML.
FIG. 20 is a diagram showing changes in PRerror_ptn(p) when a record parameter is changed.
FIG. 21 is a diagram showing changes in PRerror_ptn(p) when a record parameter is changed.
FIG. 22 is a diagram showing changes in PRerror_ptn(p) when a record parameter is changed.
FIG. 23 is a diagram showing changes in PRerror_ptn(p) when a record parameter is changed.
FIG. 24 is a diagram showing the relationship between dTtop2T and PRerror_ptn(p).
FIG. 25 is a functional block diagram of an optical recording and reproducing system according to an embodiment of the present invention.
FIG. 26 is a flowchart showing the steps for optimizing recording conditions before recording data.
FIG. 27 is a flowchart showing the steps of a process of calculating PRerror_ptn(p).
FIG. 28 is a flowchart showing the steps for optimizing recording parameters before recording data.
FIG. 29 is a flowchart showing the steps for correcting a recording condition during data recording.
FIG. 30 is a flowchart showing the steps of a process of determining a correction amount for a recording condition.
FIG. 31 is a flowchart showing the steps for correcting a recording parameter during data recording.
FIG. 32 is a flowchart showing the steps of a process of determining a correction amount for a recording parameter.
FIG. 33 is an illustration showing an example of a data structure for storing reference data in an optical disk.

Explanation of Reference Numerals

1:       Optical Unit (PU)
3:       Pre-Equalizer (Pre-EQ)
5:       ADC
7:       Equalizer
9:       Viterbi Decoder
11:     Control Unit
13:     Recording Waveform Generation Unit
15:     Optical Disk
17:     Memory
111:    Symbol Identification Section
113:    Detection Instructing Section
115:    Detection Section
117:    Calculation Section

DESCRIPTION OF PREFERRED EMBODIMENTS

[Principle of the present invention]

The present invention realizes a principle of error reduction in a reproduction system through a combination of a novel evaluation index-based data recording evaluation method and a reference condition adjusted so as to follow changes in a reproduction signal without any adverse effects that exist when the signal state serving as a reference for the evaluation index is fixed.

Hereinafter, a description will be made on an individual data recording evaluation method (PRerror for each pattern), a data recording evaluation method (total evaluation index PRerror_ttl) which makes a total evaluation by putting together individual evaluations, an adjusted reference condition which serves as a reference for comparison of the individual data recording evaluation method, that is, setting of a target level, and adaptive change thereof, and the relationship between the data evaluation method and parameters.

[1] PRerror for Each Pattern

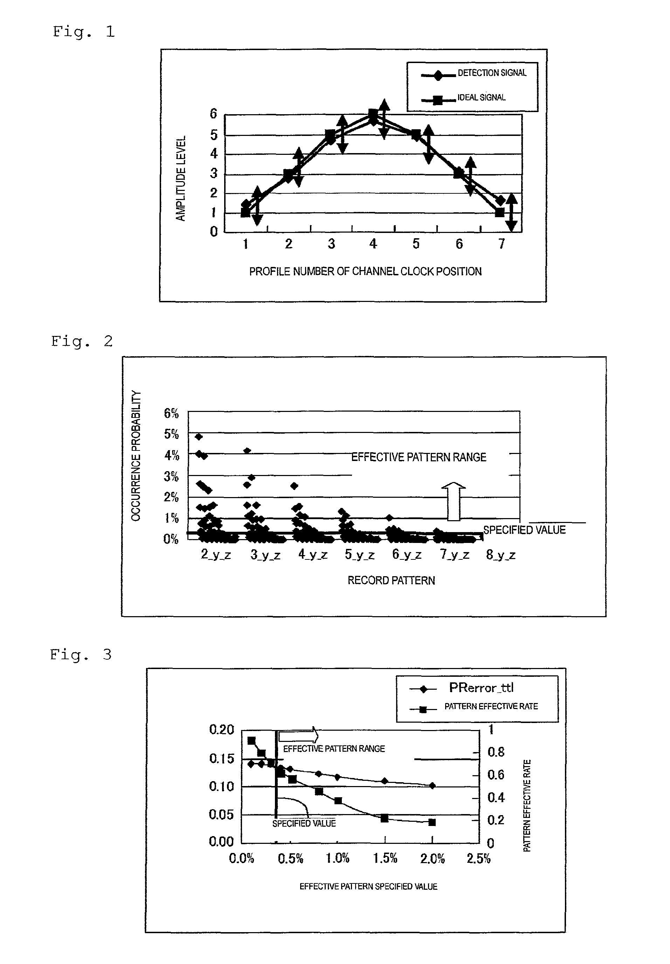

FIG. 1 shows an amplitude level of a reproduction equalization signal which is a signal state of a corresponding detection signal when a pattern, for example, including a mark having a length of 4T and an adjacent space having a length of 3T on each side of the mark is read as a predetermined detection pattern. In FIG. 1, the vertical axis represents the amplitude level of the reproduction equalization signal, and the horizontal axis represents a profile number at a channel clock position of a data sample. When an ideal detection signal (ideal signal) corresponding to the above-described pattern, namely PR(1,2,2,1) used in the BD standard is used, the values for each profile number at the channel clock position are plotted as 1, 3, 5, 6, 5, 3, 1 when converted to an amplitude level and arranged in order. On the contrary, the signal state of an actual detection signal depends on the hardware, an optical disk, and recording conditions as shown in FIG. 1, and thus deviates from an ideal state, namely a reference condition. Therefore, a gap between a reference signal state and the signal state of the detection signal is quantified using Equation (1) to evaluate the recording state. Based on the evaluation, the reproduction errors are reduced by adjusting the recording power during writing in accordance with the gap.

The signal states are expressed by equalizing a reproduction signal of a central mark having a length of 4T when a pattern including the 4T mark and an adjacent space having a length of 3T on each side of the central 4T mark is read, and the signal states serve as profile values. The influence of the adjacent symbols is the smallest at the center of the mark, and the influence of the adjacent symbols on the left and right ends of the mark is quantified. The reference ideal signal state refers to a theoretical value expressed by the Viterbi algorithm. In the present invention, it is important to change the reference signal state in accordance with a reproduction signal rather than the theoretical value.

An evaluation of the recording state is calculated by the following equation.

[Equation 1]

$$PRerror\_ptn(p) = \sqrt{\left\{\sum_{x=a}^{a+n-1}\left(D(x)-R(x)\right)^2\right\}/n}\,.$$

In this equation, D(x) represents the value of a detection signal, R(x) represents the value of an amplitude level of a reference signal, x represents a data profile number, a represents an processing beginning data number, n represents the number of processing data sampling (pieces), and p represents a record pattern type (number).

Similarly, in the case of a signal which is equalized to the equalization characteristics such as PR(1,2,2,2,1) used in the HD-DVD standard rather than PR(1,2,2,1) of the BD standard, the signal state can be evaluated by quantifying the gap between the reference signal state and the detection signal state. Moreover, since such a signal state is evaluated after the signal has passed through an equalizer, the evaluation is based on the difference between the amplitude levels of the reproduction equalization signals equalized to the equalization characteristics. However, describing it in terms of the signal state of the reproduction signal has the same meaning as above.

In the above description of the present invention, an optical disk recording method in which the quantity of reflected light at a mark is greater than the quantity of reflected light at a space is illustrated as an example. Such a method is referred to as a "Low-to-High" method. However, contrary to such an example, the same evaluation can be performed in a recording condition in which the quantity of reflected light at a mark is smaller than the quantity of reflected light at a space. Such a method is referred to as a "High-to-Low" method.

Further, the pattern described above is merely an example, and other patterns can be also evaluated using Equation (1).

For example, PRerror_ptn(p) is calculated using seven points around a peak value of the group of points where a=1 and n=7 in the equation. Alternatively, PRerror_ptn(p) may be calculated using three points around a peak value of the group of points where a=3 and n=3. Moreover, p is a number which is assigned to identify a set record pattern and which is the number of record patterns required for the evaluation. The number p changes depending on the definition of the number of symbols arranged to form a unit set record pattern. Moreover, although one record pattern is formed by a "space_mark_space" pattern or a "mark_space_mark" pattern in the example of FIG. 1, the pattern may be formed by other combinations.

That is, if a pattern has a central nT symbol which is a mark or a space, the pattern has adjacent nT symbols which are either spaces or marks. The pattern is a combination pattern in which, if the pattern has a central nT symbol which is a mark, the adjacent nT symbols are spaces. The present invention can be applied to a combination pattern in which the spaces or marks of the adjacent nT symbols correspond to the leading nT symbol and the trailing nT symbol.

Moreover, the present invention can be applied to a combination pattern of four nT symbols or a combination pattern of five nT symbols.

Further, while Equation (1) shows an operation performed when a recorded pattern p is detected once, it is desirable in practice to obtain an average of a plurality of values (cnt(p)) by considering the influence of variations in recording or detection. Here, the plurality of values is about 10 thousand code data which are reproduced so as to ensure the reliability of a combination of symbols of an intended pattern. The average is calculated from the values of reproduction equalization signals which are converted from respective detection patterns obtained by the occurrence probabilities of the code data. The number cnt(p) represents the number of detection counts of set record patterns p obtained from sample data having a predetermined length. When deriving the final value of PRerror_ptn(p), it is preferable to record PRerror_ptn(p) calculated for each detection pattern in a memory as PRerror_ptn(p, cnt(p)) and use an average of such values.

[2] Total Evaluation Index PRerror_ttl

A description will be made on a method of making a total evaluation of a reproduction signal using the above-described PRerror_ptn(p).

The appearance frequencies of patterns p within a range of about 10 thousand code data are different, and the degrees of influence on the recording characteristics arc different. That is, the higher the appearance frequency of a pattern, the more likely to affect the recording characteristics. Therefore, when making a total evaluation of recording characteristics of a reproduction signal, it is preferable to calculate a total evaluation index PRerror_ttl which quantifies the recording characteristics of the reproduction signal by using a characteristic value PRerror_ptn(p) of the pattern p and the appearance frequency, namely the occurrence probability, of the pattern p within a predetermined range of data. Specifically, the PRerror_ttl is calculated using the following equation.

[Equation 2] $$P \operatorname{Re} rror\_ttl = \sum_{p} P \operatorname{Re} rror\_ptn(p) * Occurrence\ probability(p).$$

FIG. 2 shows an example of the relationship between patterns in about 10 thousand recorded code data and their occurrence probabilities. In FIG. 2, the vertical axis represents the occurrence probabilities of the entire patterns, and the horizontal axis represents the pattern types when a row of three signs constitutes one record pattern. The first number represents n of an adjacent leading nT symbol. The second alphabet y represents n of the central (main) nT symbol, and the third alphabet z represents n of an adjacent trailing nT symbol. The n values are any number of 2 to 8 of 2T to 8T (9T may be included when a synchronous sign is included) expressed in the 1-7 PP modulation method which is used in the BD standard. The n values have a greater value as they get closer to the right side of FIG. 2. As will be understood from FIG. 2, a pattern using shorter symbols has a higher occurrence probability, whereas a pattern using longer symbols has a lower occurrence probability. For example, when marks and spaces which are short symbols appear repeatedly, a reproduction signal corresponding to these symbols has a small amplitude level, which suggests a high possibility of the occurrence of an error. This is why the present invention utilizes the concept of the occurrence probability.

As described above, if a pattern has a high occurrence probability, it can be said that the recording characteristics of the pattern, namely, the magnitude of the value given by the expression of the PRerror_ptn(p) have a great influence on the overall recording characteristics. In other words, it can be said that a pattern having an extremely low occurrence probability may be left out of consideration since the recording characteristics thereof, namely the magnitude of the value give by the expression of PRerror_ptn(p) is not so significantly reflected in the overall recording characteristics.

Therefore, as shown in FIG. 2, total quantification of the recording characteristics of a reproduction signal may be carried out by regarding only patterns of which the occurrence probabilities are equal to or greater than a predetermined occurrence probability, which serves as a specified value, as effective patterns. In this way, it is possible to reduce an operation load of the characteristic value while maintaining the accuracy of a desired characteristic value (PRerror_ttl).

In FIG. 3, changes in the ratio (pattern effective rate) of the total number of effective patterns to the total number of patterns within a predetermined measurement range when the specified value of the occurrence probability shown in FIG. 2 is changed are plotted along with the values of changes in the PRerror_ttl corresponding to the ratio changes to show the relationship between such changes. In FIG. 3, the vertical axis on the left side represents the values of PRerror_ttl, the vertical axis on the right side represents the pattern effective rates, and the horizontal axis represents specified values, namely thresholds, for effective patterns.

It can be understood from FIG. 3 that the specified value in which the accuracy of PRerror_ttl can be ensured can be set even when patterns of which the occurrence probabilities are smaller than the predetermined specified value are not used for calculation of the characteristic value PRerror_ttl. That is, according to the verification result of FIG. 3, there is substantially no change in PRerror_ttl even when the predetermined specified value is 0.3%. In addition, since the effective pattern rate is about 70%, the operation load can be reduced by about 30%.

As thus described, the index PRerror_ttl for total evaluation can be calculated with sufficient accuracy by, for example, calculating the index PRerror_ptn(p) only for patterns having an occurrence probability equal to or higher than 0.3% instead of calculating the index PRerror_ptn(p) for all record patterns.

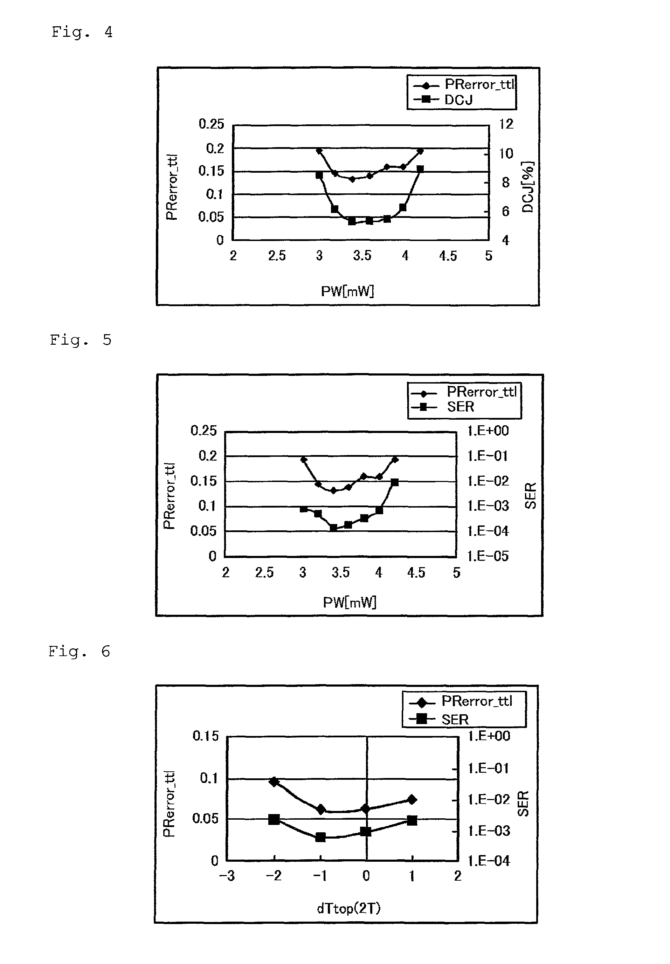

Next, changes in the PRerror_ttl when the recording power is changed continuously are shown in FIGs. 4 and 5 together with changes in DC jitters (hereinafter referred to as DCJ) and a symbol error rate (hereinafter referred to as SER), which are evaluation indices currently in use, for comparison. In FIG. 4, the vertical axis on the right side represents DCJ [%], the vertical axis on the left side represents the PRerror_ttl, and the horizontal axis represents a recording power PW [mW]. In FIG. 5, the vertical axis on the right side represents SER, the vertical axis on the left side represents the PRerror_ttl, and the horizontal axis represents a recording power PW [mW].

It can be understood from FIGs. 4 and 5 that this evaluation value PRerror_ttl is an index which has a high correlation with the existing evaluation indices (DCJ and SER). Therefore, the recording characteristics can be improved by adjusting the recording conditions in accordance with changes in this evaluation value PRerror_ttl. Specifically, when the PRerror_ttl can be calculated for a plurality of recording conditions, a recording condition providing the smallest PRerror-ttl may be adopted and set to obtain the most preferable recording characteristics. Moreover, as will be described in detail later, even when it is not possible to calculate the PRerror_ttl for a plurality of recording conditions, the recording conditions can be adjusted using PRerror_ttl which is calculated based on the results of detection.

In the first changing step, in practice, by setting the PRerror_ttl, which is the second evaluation index value, to a small value within a range of equal to or smaller than a certain value by considering the data of FIGs. 4 and 5, it is possible to maintain a high recording quality of an optical disk. For example, in FIG. 4, if the DCJ value [%] is equal to or lower than about 7%, it is possible to obtain an intended result. Moreover, if the PRerror_tt value is equal to or smaller than about 0.17, it is possible to obtain an intended result. Moreover, for example, in FIG. 5, if the SER value is equal to or lower than about 2.0E-04, it is possible to obtain an intended result. Furthermore, if the PRerror_tt value is equal to or smaller than about 0.17 as described above, it is possible to obtain an intended result.

[3] Evaluation of the Influence Level of Each Set Record Pattern on Total Evaluation Index PRerror_ttl

Next, a description will be made on a method of evaluating the recording state for each pattern from a comparison between the influence levels (PRerror_ptn(p)) for each set record pattern which constitutes the PRerror_ttl.

When a signal is written on an optical disk as symbols, the writing is performed while controlling the intensity of a laser beam. For example, when a mark having a length of 3T or more among marks having a length of an nT symbol is written with a constant width, heat control is performed using a plurality of divided short rectangular waves rather than using a simple rectangular wave of a laser beam, and heat may remain at the end of the writing. When writing is performed in such a manner, a method of performing control using a modulated waveform is referred to as "write strategy". Moreover, the irradiation of the laser beam at the beginning of the writing is performed while controlling the amounts of forward and backward shifts of the beam from a reference position (0) for a starting position (referred to as dTtop) of a top pulse so that a mark having a length of nT can be written with a constant width from an intended position.

FIG. 6 shows changes in the PRerror_ttl and SER when only the central (main) symbol y after the 2T space is changed in order to investigate the optimal value for the amount of a shift of the starting position of the top pulse of a 2T mark recording pulse in a particular strategy parameter dTtop2T. In FIG. 6, the vertical axis on the left side represents the PRerror_ttl, the vertical axis on the right side represents the SER, and the horizontal axis represents the dTtop2T. It can be understood that both PRerror_ttl and SER change similarly to have minimum values with changes of dTtop2T. It can be understood that the minimum values of PRerror_ttl and SER are both at about -1 in practice. This value is detected and reflected in the amount of a shift of the starting position of the top pulse (referred to as dTtop) from the reference position.

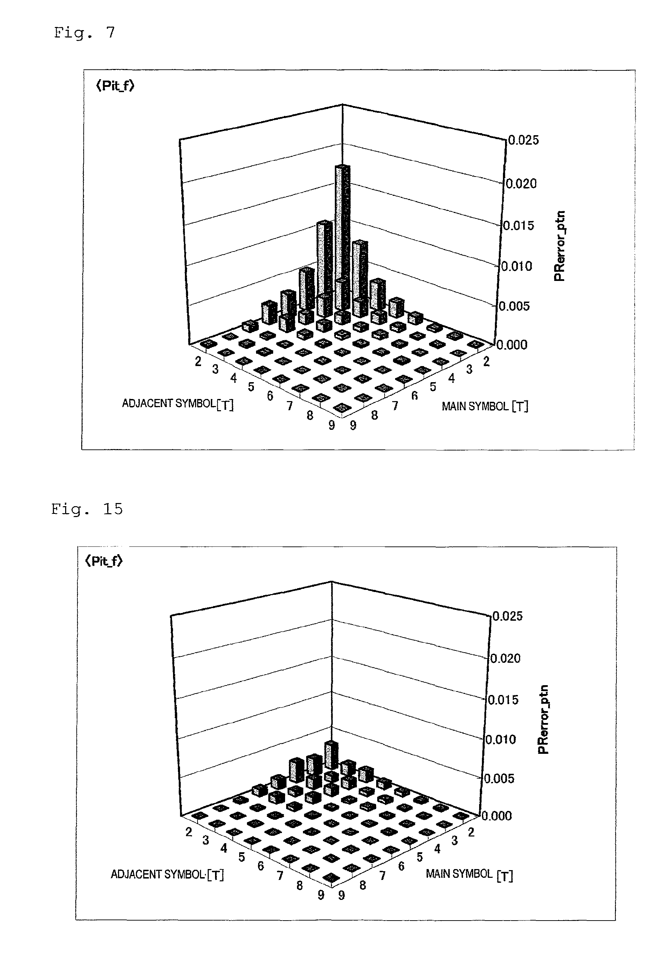

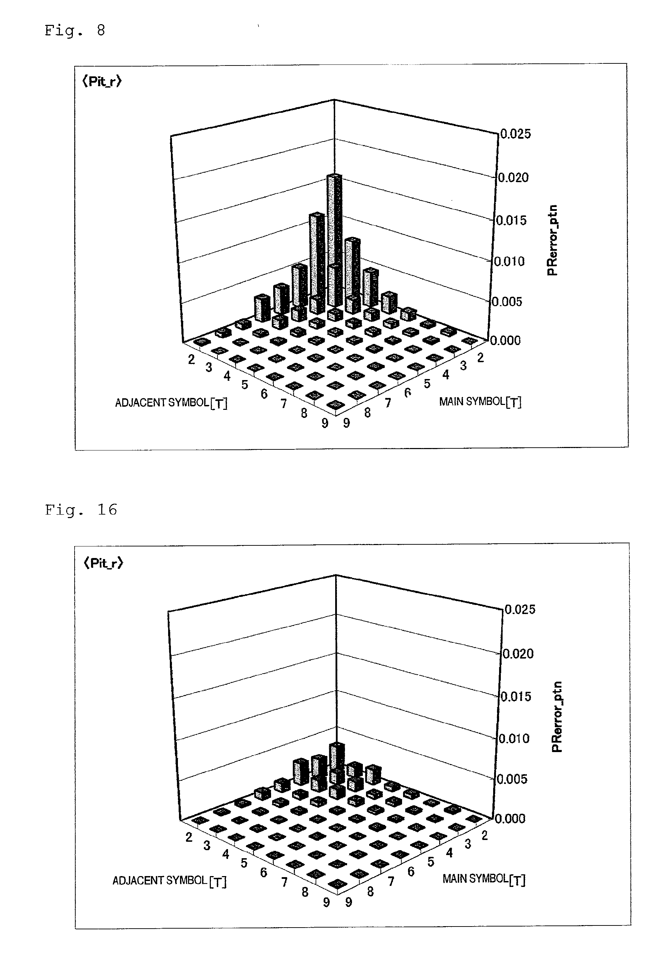

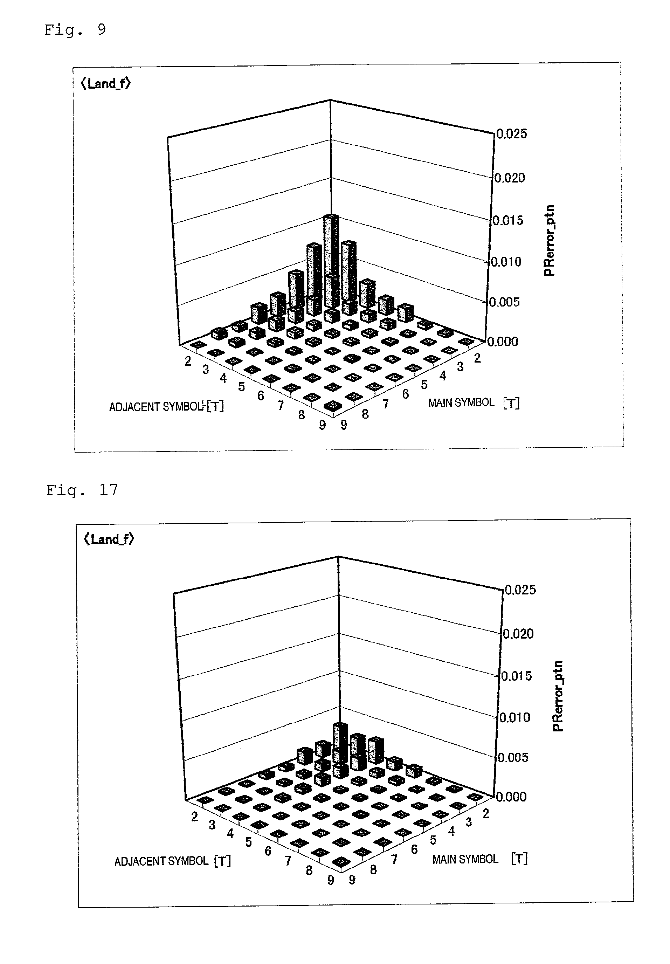

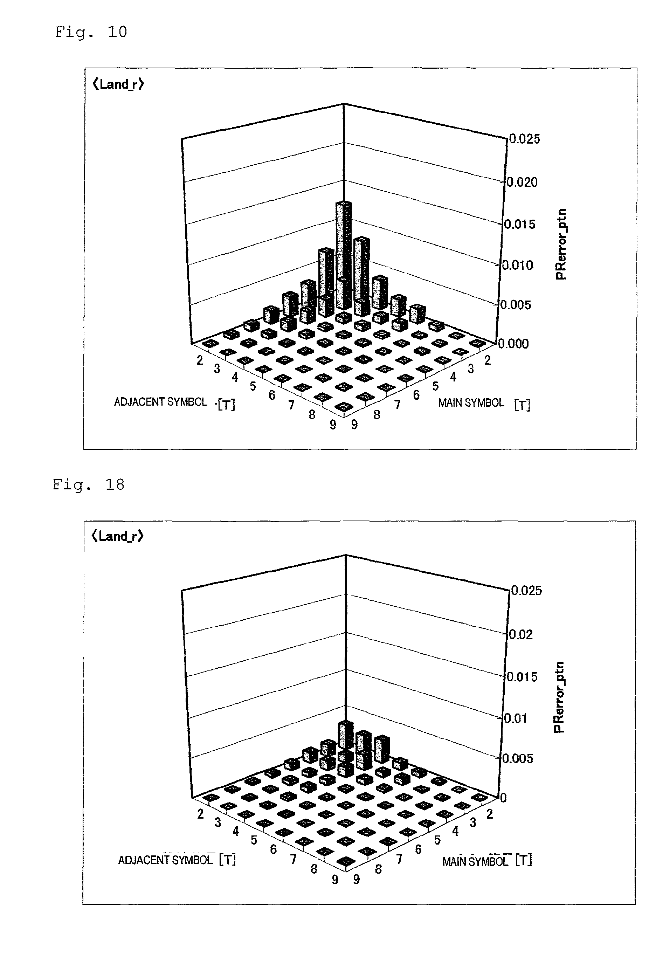

Further, FIGs. 7 to 10 show 3-D bar graphs showing the influence levels PRerror_ptn(p) for each pattern which constitutes the PRerror_ttl when a correction amount of dTtop2T is 0 in FIG. 6. FIG. 7 shows respective PRerror_ptn(p) values obtained for a Pit_f pattern whose main symbol is an nT mark and whose adjacent symbol is a leading nT space. FIG. 8 shows respective PRerror_ptn(p) values obtained for a Pit_r pattern whose main symbol is an nT mark and whose adjacent symbol is a trailing nT space. FIG. 9 shows respective PRerror_ptn(p) values obtained for a Land_f pattern whose main symbol is an nT space and whose adjacent symbol is a leading nT mark. FIG. 10 shows respective PRerror_ptn(p) values obtained for a Land_r pattern whose main symbol is an nT space and whose adjacent symbol is a trailing nT mark.

Referring to FIGs. 7 to 10, the reason why a pattern including short symbols such as a 2T mark or 2T space has a high influence level is due to the fact that the pit for a 2T symbol is not easily made, and is therefore likely to deviate from a reference condition, and that a pattern including such symbols has a high occurrence probability.

In this way, each set record pattern can be evaluated from the PRerror_ptn(p) values which constitute the total evaluation index value PRerror_ttl.

Due to limitations in graphical representation, FIGs. 7 to 10 show only the influence levels of a set record pattern which is a combination of a main symbol and an adjacent (leading or trailing) symbol on one side thereof. However, in an actual system, a pattern which is a combination of a main symbol and adjacent (leading and trailing) symbols on both sides thereof may be evaluated. Moreover, if necessary, a symbol which is located further out from the adjacent leading or trailing symbol may be included in a combination pattern.

Hereinabove, a description has been made on the individual data recording evaluation method (PRerror for each pattern) and the data recording evaluation method (total evaluation index PRerror_ttl) which makes a total evaluation by putting together individual evaluations. In these evaluations, a method of measuring the gap of a detection signal from a fixed ideal signal serving as a reference was described. Moreover, a description has been made on a method of adjusting the recording power so as to minimize the errors associated with individual code patterns by making an evaluation considering the occurrence probability and the influence level, and a correction method of adjusting the starting position of the top pulse of a write strategy so as to minimize the errors by making a total evaluation by putting together individual patterns. By such an invention, a considerably high reproduction quality can be expected.

However, if the signal serving as the reference for the above-described evaluation is fixed during the maximum likelihood decoding, a situation may occur in which it is not always possible to minimize the errors during reproduction. Therefore, it becomes important to change the reference signal at an appropriate time in accordance with the reproduction signal.

The present invention aims to realize high-quality reproduction, such as minimization of errors during reproduction, by providing a routine function in which by changing a signal serving as a reference for an evaluation during maximum likelihood decoding in accordance with a reproduction signal at an appropriate time, individual data recording evaluations (PRerror for each pattern) are made based on the changed reference signal so that a correction instruction is issued so as to obtain an optimal reference signal corresponding to a reproduction signal obtained by reproducing recorded data.

A description will be made of an example of a method of setting such a reference signal by way of a method of setting a target level and the changes in the target level with the flow of a reproduction signal.

[4] Adaptive Change of Target Level

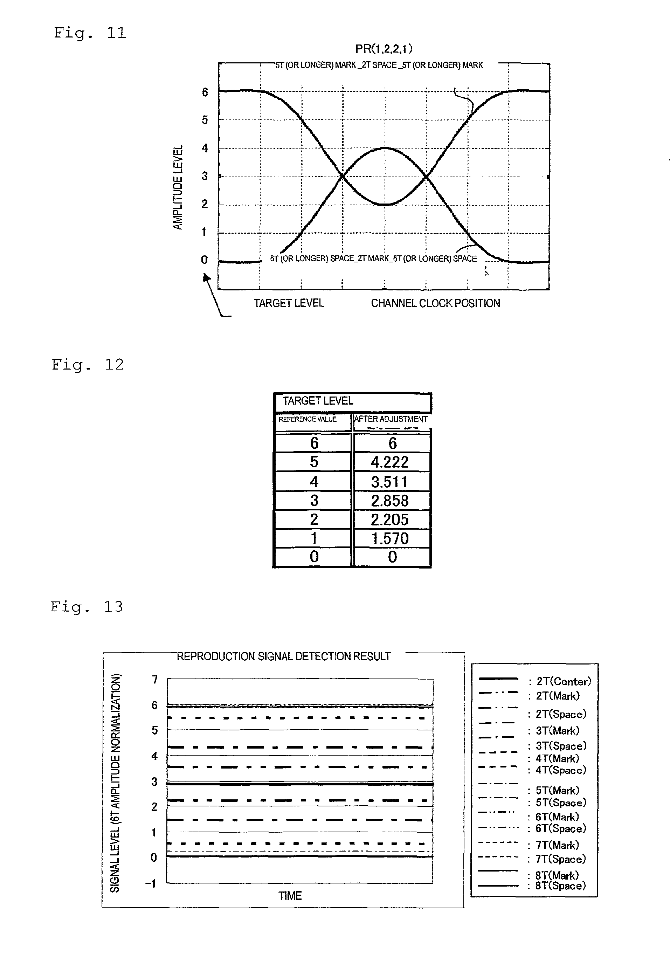

First, general target levels will be described with reference to FIG. 11. This description is an example when PR (1,2,2,1) used in the BD standard is used. FIG. 11 shows symmetrical signals which are a signal composed of a 5T (or longer) space, a 2T mark, and a 5T (or longer) space and a signal composed of a 5T (or longer) mark, a 2T space, and a 5T (or longer) mark. As shown in the figure, the values of the target levels of the respective amplitude levels during Viterbi decoding using PR(1,2,2,1) have a 7-step level ranging from 0 to 6. These level values at the channel clock position have a minimum level value of 0, which is the peak level value of an amplitude level corresponding to a mark, a maximum level value of 6, which is the peak level value of an amplitude level corresponding to a space, and a central level value of 3. The upper and lower level values which are the closest to the central level are 4 and 2, respectively. Moreover, the upper and lower level values which are the second closed to the central level are 5 and 1, respectively. As described above, the spacing between the level values in the general target levels is equal and fixed. A judgment of the reproduction equalization signal, which has been subjected to waveform equalization, is made based on this target level. However, the adverse effects of fixing the comparison reference of such an equally spaced reproduction equalization signal are as described above. The same statements can be applied to the case of using PR(1,2,2,2,1) used, for example, in the HD-DVD standard as the case of the BD standard, and description thereof will be omitted.

With reference to FIGs. 12, 13, and 14, an example of a dynamic setting method of the target level applicable to the present invention will be described in detail.

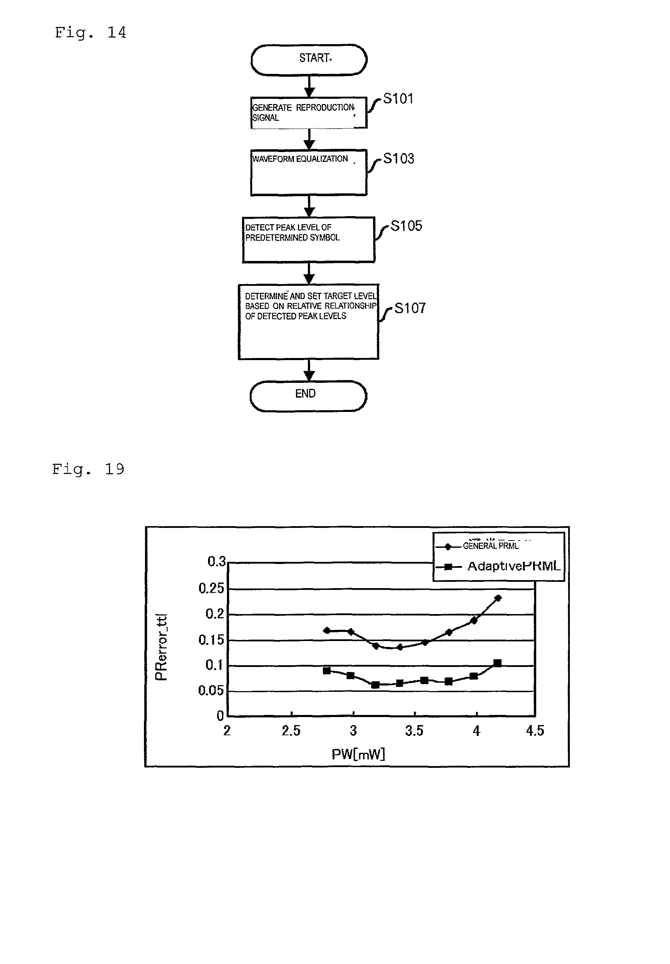

First, an optical recording information medium to be reproduced is irradiated with a laser beam, and reflected light from the optical recording information medium is received. The reflected light is converted into an electric signal and converted into a digital signal to generate a reproduction signal (FIG. 14: step S101). Moreover, a waveform equalization process corresponding to PR characteristics is performed on the generated reproduction signal (step S103). Then, symbol identification is performed on the reproduction equalization signal which has been subjected to waveform equalization to detect the peak level of the reproduction equalization signal (step S 105).

Specifically, in the case of an application example to the BD standard, an average value of the peak level values in amplitude profiles of the reproduction equalization signal corresponding to the mark and space of the shortest symbol, an average value of the peak level values in amplitude profiles of the reproduction equalization signal corresponding to the mark and space of the next shortest symbol, an average value of the peak level values in amplitude profiles of the reproduction equalization signal corresponding to the mark and space of the third shortest symbol, an average value of the peak level values in amplitude profiles of the reproduction equalization signal corresponding to the mark and space of one of the upper two symbols whose length is twice or more longer than the shortest symbol and whose occurrence probability in a symbol length in which the signal amplitude reaches a saturation state is high, and an average value of the peak level values in amplitude profiles of the reproduction equalization signal corresponding to the mark and space of a symbol having a length of 5T or longer are detected as the respective peak level values.

Moreover, in the case of the HD-DVD standard, an average value of the peak level values of a signal corresponding to the mark and space of the shortest symbol, an average value of the peak level values of a signal corresponding to the mark and space of the next shortest symbol, an average value of the peak level values of a signal corresponding to the mark and space of the third shortest symbol, an average value of the peak level values of a signal corresponding to the mark and space of one of the upper two symbols whose length is twice as long as the shortest symbol and whose occurrence probability is high, and an average value of the peak level values of a signal corresponding to the mark and space of a symbol having a length of 5T or longer are detected as the respective peak levels.

Moreover, the target levels of the signals used during the Viterbi decoding are determined based on the relative positional relationship between the detected peak level values, and are set in a processor that performs Viterbi decoding processing (step S107). Hereinafter, the contents of this step will be described in detail.

(1) Central Level of All Target Levels of Signals Used for Viterbi Decoding

In the case of PR(1,2,2,1), the central level value is around 3.

Moreover, in the case of PR(1,2,2,2,1), the central level value is around 4.

The peak level values A and B corresponding to the mark and space, respectively, of a symbol having a length of 5T or longer are detected. Next, the peak level value C corresponding to a mark of the shortest symbol is detected. At the same time, the peak level value D corresponding to a space of the shortest symbol is detected. Thereafter, an intermediate level value E of the values C and D is computed. A value that is calculated by a relative value through computation from the three values A, B, and E thus obtained is set as the central level value.

Here, instead of the symbol having a length of 5T or longer, at least one of the two highest occurring symbols in terms of occurrence probabilities among the symbols that have a length twice or more longer than the shortest symbol and that have the signal amplitude reaching a saturation state can be used. The peak level values of the signal corresponding to the mark and space of such a symbol can be substituted for the values A and B of the peak level values of the signal corresponding to the symbol having a length of 5T or longer. The same substitution can be applied in the following cases, and description thereof will be omitted.

(2) Levels Corresponding to 2T Mark and 2T Space Located Closest to Central Level

In the case of PR(1,2,2,1), the level values are around 2 and 4, respectively.

In the case of PR(1,2,2,2,1), the level values are around 3 and 5, respectively.

The peak level values A and B of a signal corresponding to the mark and space of a symbol having a length of 5T or longer are detected. Next, the peak level value D of a signal corresponding to a mark of the shortest symbol is detected. Further, the values A and B and the peak level value C are detected. At the same time, the peak level value C of a signal corresponding to a space of the shortest symbol is detected. Thereafter, a value that is calculated by a relative value through computation from the three values A, B, and C thus obtained is set as the level value that is located the closest to the central level of the target levels for the mark used for the Viterbi decoding. At the same time, a value that is calculated by a relative value through computation from the three values A, B, and D is calculated and set as the level value that is located the closest to the central level of the target levels for the space used for the Viterbi decoding.

The relationship between the mark and space changes its polarity depending on the recording method (High-to-Low/Low-to-High). In the case of High-to-Low, the lower levels are determined using the peak level of the mark of the shortest symbol, and the upper levels are determined using the peak level of the space of the shortest symbol. In the case of the Low-to-High, the levels are determined in an opposite manner. In the following description, this relationship between the mark and space and the recording method remains the same. In the description of the present invention, an example of using the Low-to-High method is described. Therefore, although description of the High-to-Low method is omitted, the same can be understood by changing the polarities.

(3) Levels Corresponding to 3T Mark and 3T Space Located Second Closest to Central Level of Target Level

In the case of PR(1,2,2,1), the level values are around 1 and 5, respectively.

In the case of the characteristics of PR(1,2,2,2,1), the level values are around 2 and 6, respectively.

The peak level values A and B of a signal corresponding to the mark and space of a symbol having a length of 5T or longer are detected. Next, the peak level value F of a signal corresponding to a mark of the second shortest symbol is detected. At the same time, the peak level value G of a signal corresponding to a space of the second shortest symbol is detected. Thereafter, a value that is calculated by a relative value through computation from the three values A, B, and F thus obtained is set as the level value that is located the second closest to the central level of the target levels for the mark used for the Viterbi decoding. At the same time, a value that is calculated by a relative value through computation from the three values A, B, and G is calculated and set as the level value that is located the second closest to the central level of the target levels for the space used for the Viterbi decoding.

(4) Levels Corresponding to 4T Mark and 4T Space Located Third Closest to Central Level of Target Level

In the case of the characteristics of PR(1,2,2,1), the level values are around 0 and 6, respectively.

In the case of the characteristics of PR(1,2,2,2,1), the general level values are around 1 and 7, respectively.

The peak level values A and B of a signal corresponding to the mark and space, respectively, of a symbol having a length of 5T or longer are detected. Next, the peak level value H of a signal corresponding to a mark of the third shortest symbol is detected. At the same time, the peak level value I of a signal corresponding to a space of the third shortest symbol is detected. Thereafter, a value which is calculated by a relative value through computation from the three values A, B, and H thus obtained is set as the level value that is located the third closest to the central level of the target levels for the mark used for the Viterbi decoding. At the same time, a value which is calculated by a relative value through computation from the three values A, B, and I is calculated and set as the level value that is located the third closest to the central level of the target levels for the space used for the Viterbi decoding.

(5) Maximum and Minimum Levels of Target Level

In the case of the characteristics of PR(1,2,2,1), the level values of a signal corresponding to a symbol having a length of 5T or longer are 0 and 6. Therefore, the level values of the two highest occurring symbols in terms of occurrence probability among the symbols that have a length twice or more longer than the shortest symbol and that have the signal amplitude reaching a saturation state are substantially the same as the level values of a symbol having a length of 5T or longer. In this case, substantially the same results are obtained regardless of which level value is used.

In the case of the characteristics of PR(1,2,2,2,1), the level values are 0 and 8, respectively.

The peak levels of the mark and space of at least one of the two highest occurring symbols in terms of occurrence probability among the symbols that have a length more than twice longer than the shortest symbol are determined as the maximum and minimum level values of the target levels used for the Viterbi decoding. Which one of the mark and space will correspond to the maximum and minimum levels is determined depending on the recording method similar to the above-described examples.

Instead of using the calculated peak level values as the target levels as described above, values obtained by multiplying the peak level values with an appropriate coefficient may be used as the target level values. Moreover, in the case of the PR(1,2,2,1), any one of the above described (4) and (5) may be used.

By performing the above-described process, the target levels which were arranged at equal spacings in the related-art technique are arranged at non-equal spacings by computing the relative values in accordance with the actual state of the peak levels.

A specific example of setting target levels for the case of the BD standard is shown in FIGs. 12 and 13. A relative intermediate level value of the peak level of a 2T mark and the peak level of a 2T space is set to a target level "2.858" which is the central level so as to be shifted toward the negative side by an amount of 0.142 as compared to the normal case.

Further, a relative peak level value corresponding to a 2T space is set to a target level "2.205" so as to be shifted toward the positive side by an amount of 0.205 as compared to the normal case. Moreover, a relative peak level value corresponding to a 2T mark is set to a target level "3.511" so as to be shifted toward the negative side by an amount of 0.489 as compared to the normal case.

Furthermore, a relative peak level value corresponding to a 3T space is set to a target level "1.570" so as to be shifted toward the positive side by an amount of 0.570 as compared to the normal case. Moreover, a relative peak level value corresponding to a 3T mark is set to a target level "4.222" so as to be shifted toward the negative side by an amount of 0.778 as compared to the normal case.

In the case of a 4T symbol, the target levels became 0 and 6 which are the same values as a symbol having a length of 5T or longer. By setting the target levels in such a manner, the reduction percentage of the error rate for a reference value was 56%.

In this way, the respective target level values are as shown in FIGs. 12 and 13. As shown in the figures, although the target levels "6" and "0" are fixed, the other target level values are arrange at non-equal spacings. In this way, by controlling the arrangement of spacings using the reproduction equalization signal in the flow of symbols from a 2T symbol to a symbol having a length of 5T or longer, the target level values used for the Viterbi decoding are obtained. As described above, by changing the level settings of a symbol whose appearance frequency is high and whose error rate tends to be high, it is possible to effectively reduce the error rate for subsequent reproduction.

As a premise of the present invention, there is a technique of adaptively changing the target signal level used for Viterbi decoding in accordance with a reproduction equalization signal that has been subjected to waveform equalization to reduce the error rate during reproduction and enabling stable reproduction of information from an optical disk.

As a method for adaptively changing the target levels in such a manner, although the method which will be described later may be used, other methods such as a target signal level setting method as disclosed, for example, in JP-A-2005-346897 are known. The present invention can be applied using such a method.

Regardless of which method is used for adaptively changing the target levels, when the target levels are changed, the signal waveform itself of the reproduction equalization signal serving as the reference will be changed.

For example, when a pattern having a mark having a length of 4T and an adjacent space having a length of 3T on both sides thereof is read as described above, the amplitude level of an ideal reproduction signal has level values of an amplitude profile which are 1, 3, 5, 6, 5, 3, 1 in the case of using the PR(1,2,2,1) used in the BD standard. In contrast, the target levels used in the present invention forms a signal which passes through amplitude levels which are 0, 1.570, 2.205, 2.858, 3.511, 4.222, and 6 as shown in FIG. 13. By changing the level values of such an amplitude profile in accordance with the flow of a reproduction signal, it is possible to achieve optimal quality reproduction. Moreover, by making evaluations, the adaptive change method can be applied to the adjustment of the recording power at the time of writing and the adjustment of the write strategy.

By applying the technique of adaptively changing the target levels in accordance with the reproduction signal state and then calculating the influence levels (PRerror_ptn(p)) for each pattern constituting the PRerror_ttl when the correction amount for the dTtop2T is 0, the results shown in FIGs. 15 to 18 corresponding to FIGs. 7 to 10, respectively, can be obtained. As will be understood from FIGs. 15 to 18, the PRerror_ptn(p) values are apparently decreased. This means that by the adaptive change of the target levels in accordance with the reproduction signal state, the reproduction equalization signal serving as a reference is changed, and a gap between the detected reproduction equalization signal and the reference reproduction equalization signal is reduced, whereby the stability of data decoding is improved.

The PRerror_ttl values are also improved due to the fact that the target levels are adaptively changed in accordance with the state of a reproduction signal. FIG. 19 shows changes in PRerror_ttl in response to a change in the recording power Pw when general PRML is used and when adaptive PRM L is used, namely when the present invention is applied. In FIG. 19, the vertical axis represents PRerror_ttl, and the horizontal axis represents the recording power Pw. As described above, the PRerror_ttl values are improved as a whole. This is because the respective PRerror_ptn(p) values that constitute the PRerror_ttl are reduced.

[5] Relationship Between PRerror_ptn(p) and Strategy Parameter

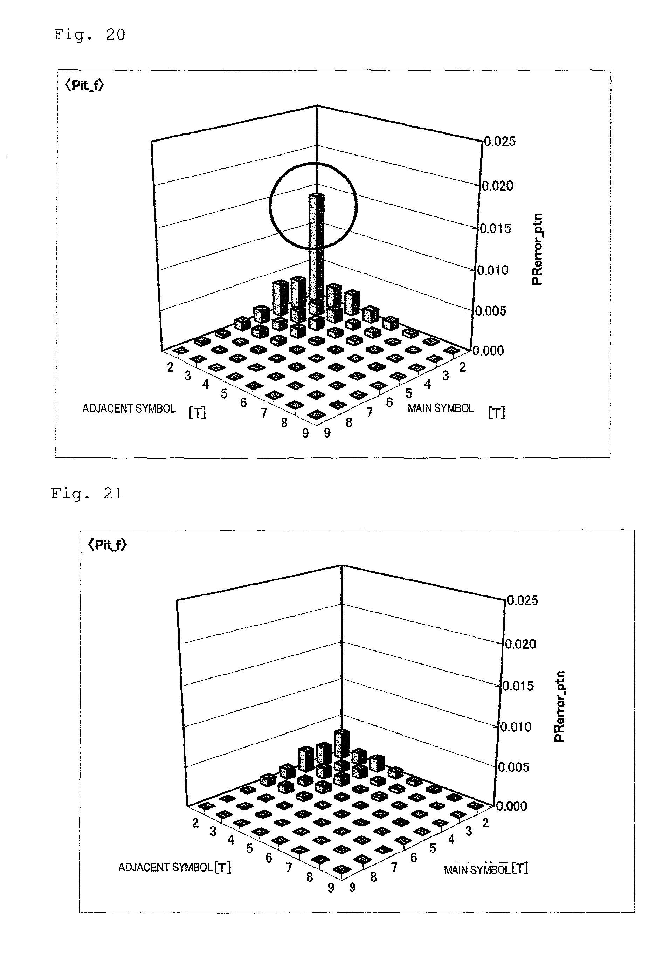

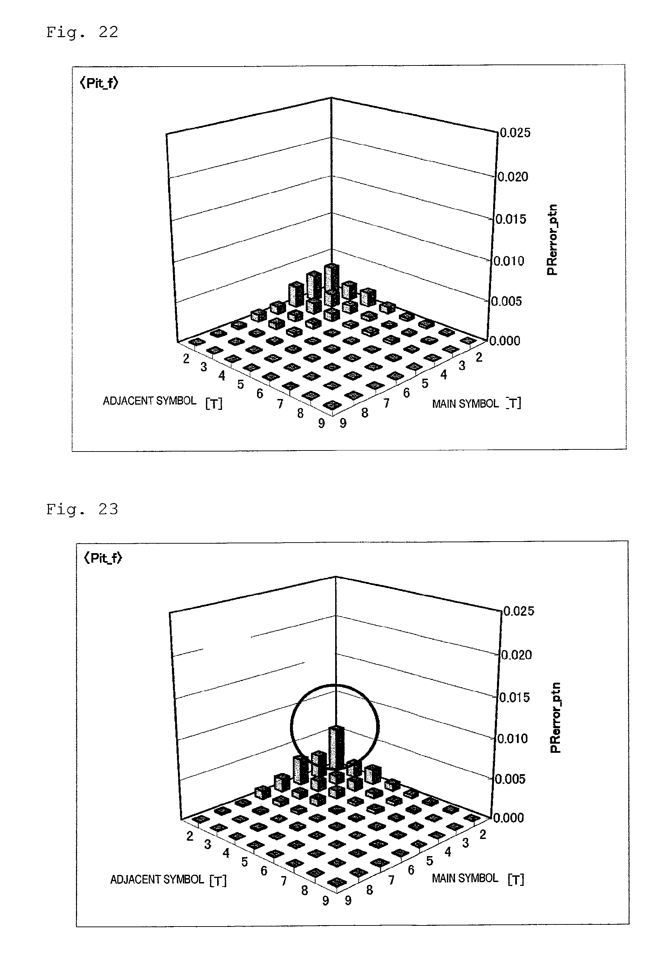

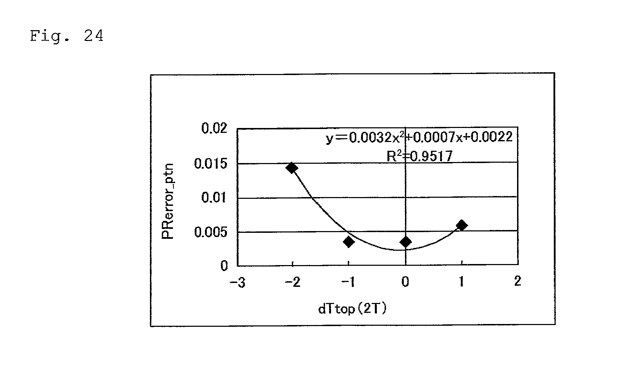

Next, a description will be made on changes in the influence levels (PRerror_ptn(p)) for each pattern when dTtop2T is continuously changed (from -2 to +1). FIGs. 20 to 23 show 3-D bar graphs for Pit_f patterns (whose main symbol is an nT mark and whose adjacent symbol is a leading nT space) which are greatly influenced by the change in dTtop2T.
It can be understood from FIGs. 20 to 23 that the change in dTtop2T has a significant influence on the PRerror_ptn(p) corresponding to a pattern having a 2T space followed by a 2T mark. In particular, the PRerror_ptn(p) is increased greatly particularly when dTtop2T is -2 (FIG. 20).
Next, FIG. 24 shows changes in PRerror_ptn(p) of a pattern having a 2T space followed by a 2T mark resulting from the change in the recording parameter dTtop2T. In FIG. 24, the vertical axis represents PRerror_ptn(p), and the horizontal axis represents dTtop2T. Moreover, the rhombic points represent actually calculated values, and the curve represents the result of quadratic regression of the actually calculated values. The use of such data enables the optimization or adjustment of the recording parameter dTtop2T using the PRerror_ptn(p). Although the recording parameter dTtop2T is varied in the above-described example, it is obvious that the same can be applied to various recording parameters. Although FIGs. 20 to 23 show changes in the influence levels of patterns which are combinations of a leading space and a trailing mark, the selection of the patterns is determined in accordance with the recording parameter used. When it is judged that the PRerror_ptn(p) of a particular pattern has a great value which needs to be adjusted, a corresponding recording parameter which should be adjusted is also identified.

[Embodiments]

Hereinafter, embodimenets for carrying out the present invention will be described with reference to flowcharts in conjunction with the functions of blocks of a functional block diagram of a recording and reproduction device for optical disk.

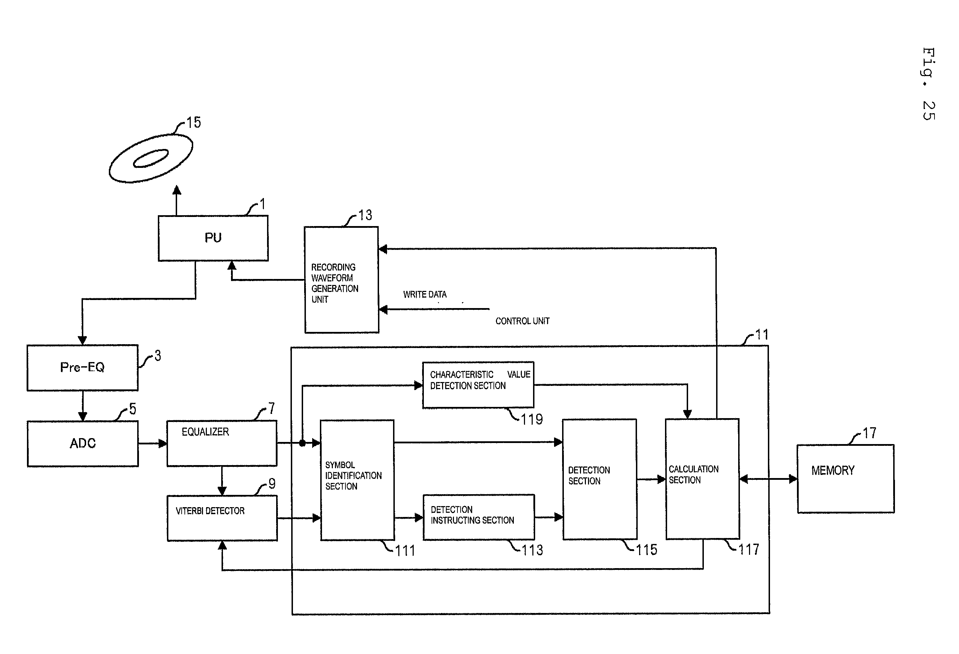

FIG. 25 shows a functional block diagram of an optical recording and reproduction system according to an embodiment of the present invention. The optical recording and reproduction system according to the present embodiment includes an optical unit (PU) 1 for irradiating an optical disk 15 with a laser beam to perform recording or reproduction, a pre-equalizer (Pre-EQ) 3 for performing a waveform equalizing process on an electric signal from a photo-detector included in the optical unit 1 to facilitate the conversion of the electric signal into a digital signal at a subsequent step, an analog/digital converter (hereinafter referred to as "ADC") 5 for converting an analog signal into a digital signal, an equalizer 7 for equalizing imperfect frequency response of a digital signal having inter-symbol interference so that an amplitude level at the central position in the length direction of an nT mark corresponds to a peak value, and the values of the amplitude levels at positions apart from the central position under the influence of adjacent nT spaces are equalized to a ratio of seven levels from 0 to 6, for example, a Viterbi decoder 9 for decoding most probable standard symbol series from reproduction RF signals which have been subjected to waveform equalization by the equalizer 7, a control unit 11 for performing processing using the outputs from the equalizer 7 and the Viterbi decoder 9, a recording waveform generation unit 13 for generating a recording waveform for write data according to setting output from the control unit 11 and outputting the recording waveform to the optical unit 1, and a memory 17 for storing the results of the processing by the control unit 11. Although not shown, the optical recording and reproduction system may be connected to a display device or a personal computer. In some occasions, the system may be connected to a network to communicate with one or a plurality of computers.
The control unit 11 includes a symbol identification section 111 for correlating a reproduced RF signal which is the output of the equalizer 7 with maximum likelihood decoding sign data which is the output of the Viterbi decoder 9, a detection instructing section 113 for instructing detection of an amplitude level when an occurrence of a predetermined detection pattern is detected based on code data from the symbol identification section 111, a detection section 115 for detecting the amplitude level of the reproduced RF signal from the symbol identification section 111 in accordance with the instruction from the detection instructing section 113, and a calculation section 117 for calculating a peak level based on the output from the detection section 115, for performing calculation of a plurality of target levels for the above-mentioned signal used for maximum likelihood decoding of the reproduction signal and setting to the Viterbi decoder 9, and for performing the operations described in the Principle of Invention section, and adjustment and setting of strategy, and the like. Moreover, for example, the calculation section 117 may be realized as a combination of programs for carrying out functions described below, and a processor. In such a case, the programs may be stored in a memory included in the processor.

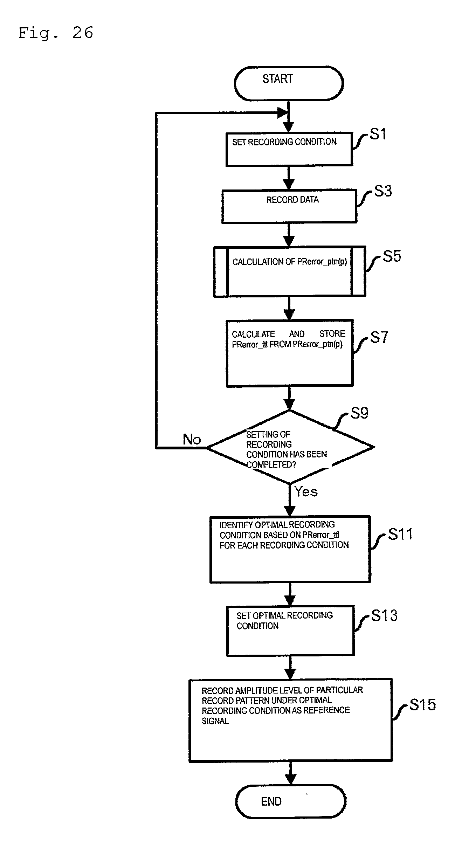

Next, a description will be made on the contents of processes performed by the optical recording and reproduction system with reference to FIGs. 26 to 32. First, a description will be made on a recording condition optimization process using a trial writing area provided at the innermost circumference of an optical disk 15 prior to data recording.

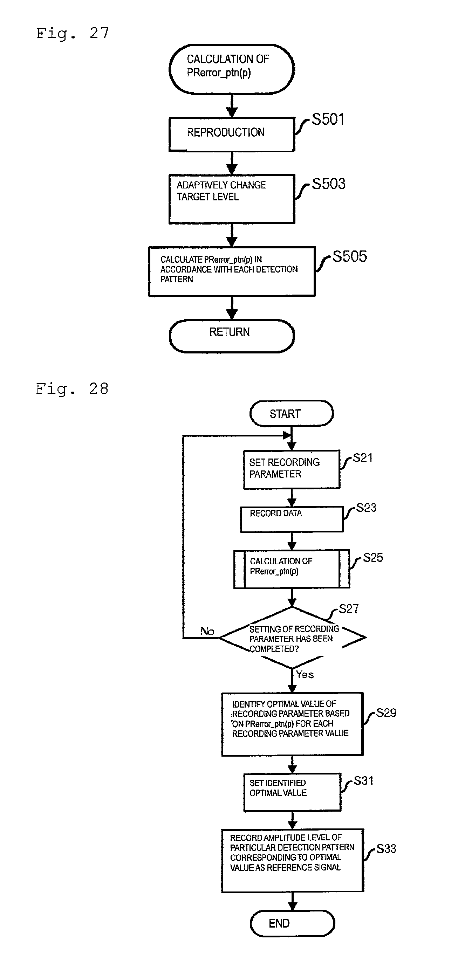

For example, the calculation section 117 of the control unit 11 sets a predetermined recording condition in the recording waveform generation unit 13 (FIG. 26: step S1). The recording waveform generation unit 13 writes a predetermined record pattern in the trial writing area of the optical disk 15 using the PU 1 in accordance with the set recording condition (step S3). Then, a PRerror_ptn(p) calculation process is performed (step S5). The PRerror_ptn(p) calculation process will be described with reference to FIG. 27.

First, a reproduction signal which has been subjected to waveform equalization is generated by the PU 1, the pre-equalizer 3, and the equalizer 7 (FIG. 27: S501), and write codes are decoded by the Viterbi decoder 9. Moreover, the symbol identification section 111 correlates the output of the equalizer 7 with the output of the Viterbi decoder 9. The detection instructing section 113 instructs the detection section 115 to detect the amplitude levels of the reproduction signals for all detection patterns (detected strings of symbols [T]). Since the detection patterns are used for both adaptive change of the target level and calculation of PRerror_ptn(p), only effective patterns described above may be detected if it is possible to perform adaptive change of the target level using only the effective patterns.

The detection section 115 detects the amplitude levels of the reproduced RF signal in accordance with the instruction from the detection instructing section 113 and outputs the detection results to the calculation section 117. Moreover, the calculation section 117 performs a predetermined operation based on the detection results of the detection section 115 to perform adaptive change of the target level (step S503) and sets the changed target level to the Viterbi decoder 9. As for the processing for adaptive change of the target level, the method described in detail above is used. However, the method is not limited to this, and the adaptive change of the target level can be performed using other methods. Moreover, the calculation section 117 calculates PRerror_ptn(p) for each pattern and stores the PRerror_ptn(p) in a storage such as a memory (step S505). As described above, since the predetermined pattern p is detected many times, an average value of PRerror_ptn(p) values is calculated. Moreover, the calculation section 117 stores the amplitude level of a particular pattern $p_c$ which will be used later. Alternatively, only a peak value may be stored.

Returning to FIG. 26, the calculation section 117 calculates PRerror_ttl using the PRerror_ptn(p) calculated for each pattern in step S5 and the occurrence probability of each pattern stored in advance in a memory and stores the PRerror_ttl in a storage device such as a memory as corresponding to the recording condition set in step S1 (step S7). The data is also used for adjusting a recording condition during data recording.

Moreover, the calculation section 117 judges whether or not all the predetermined recording conditions have been set (step S9), and if there is any unset recording condition, the process returns to step S1. If setting has been completed for all the predetermined recording conditions, a recording condition under which the PRerror_ttl has the smallest value is identified as an optimal recording condition based on the PRerror_ttl for each recording condition (step S11). For example, since recording power or the like at which the PRerror_ttl has the smallest value can be identified, that recording power or the like is adopted.

Moreover, the calculation section 117 sets the optimal recording condition in the recording waveform generation unit 13 (step S13). The amplitude level corresponding to the particular pattern $p_c$ in the optimal recording condition is stored in a storage device such as a memory as a reference signal (step S15). The data is used for adjusting a recording condition during data recording.

By performing such a process, it is possible to perform a recording condition optimization process using the trial write area based on the PRerror_ttl and set an optimal recording condition.

Next, a case of using PRerror_ptn(p) for individual patterns will be described as a second example of a recording condition optimization process in the trial write area.

For example, the calculation section 117 of the control unit 11 sets a predetermined recording parameter in the recording waveform generation unit 13 (FIG. 28: step S21). Moreover, the recording waveform generation unit 13 writes a predetermined pattern in the trial writing area of the optical disk 15 using the PU 1 in accordance with the set recording parameter (step S23). Next, PRerror_ptn(p) calculation process is performed (step S25). This process is the same as the process described with reference to FIG. 27. The calculated PRerror_ptn(p) values are stored in the memory 17 as corresponding to the recording parameter set in step S21. This data is used for adjusting the recording parameter during data recording. As described above, since the pattern p is detected many times, an average value of the PRerror_ptn(p) values is calculated. Moreover, the calculation section 117 stores the amplitude level of the pattern p. Alternatively, only a peak value may be stored.

Moreover, the calculation section 117 judges whether all predetermined values of the recording parameter have been set (step S27), and if there is any unset recording condition, the process returns to step S21. If setting has been completed for all the predetermined values of the recording parameter, the calculation section 117 identifies the value of the recording parameter at which the PRerror_ptn(p) has the smallest value as an optimal value based on the PRerror_ptn(p) values for the respective values of the recording parameter (step S29). As described above, since each detection pattern has a corresponding recording parameter, an optimal value is identified for the corresponding recording parameter in step S29. For example, as shown in FIG. 24, since the value (-1) of dTtop2T at which the PRerror_ptn(p) for a pattern p having a 2T space followed by a 2T mark is smallest can be identified, that value of dTtop2T is adopted.

Moreover, the calculation section 117 sets the identified optimal value in the recording waveform generation unit 13 (step S31). Moreover, the amplitude level of the pattern p at the optimal value is stored in a storage device such as a memory as a reference signal (step S33). The data is used for adjusting the recording parameter during data recording.

By performing such a process, it is possible to perform a recording parameter optimization process using the trial write area based on the PRerror_ptn(p) and optimize at least a part of the recording parameters.

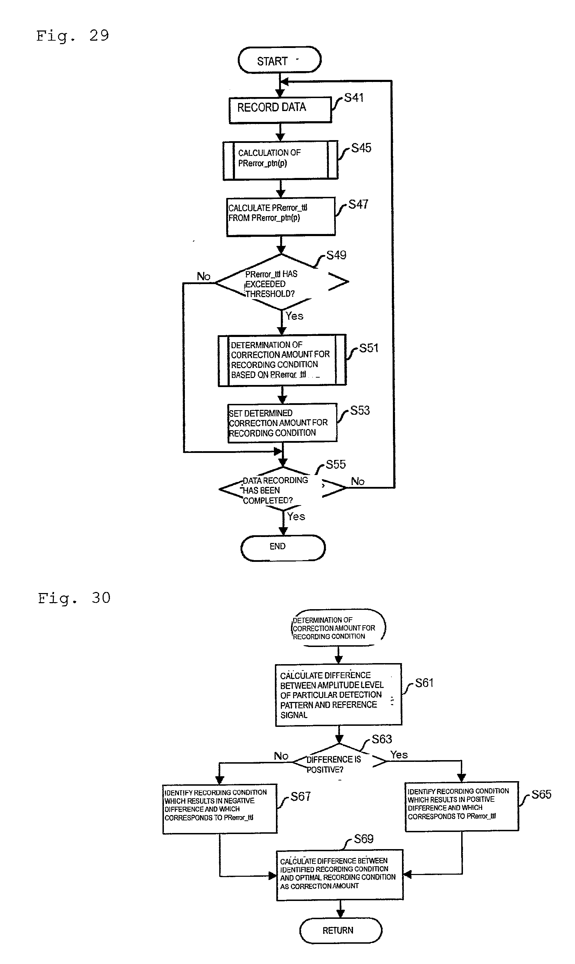

Next, a description will be made on a first example of a process of adjusting recording conditions after data recording is started with reference to FIGs. 29 and 30.

The recording waveform generation unit 13 writes data to be written using the PU 1 in accordance with recording conditions set therein (step S41). Here, it will be assumed that data are written in a predetermined amount or for a predetermined period of time. Next, a PRerror_ptn(p) calculation process is performed (step S45). In this example, the same process as that described with reference to FIG. 27 is performed. The calculated PRerror_ptn(p) values for each pattern are stored in the memory 17. As described above, since the pattern p is detected many times, an average value of the PRerror_ptn(p) values is calculated. Moreover, the calculation section 117 stores the amplitude level of the amplitude profile for a particular pattern $p_c$ which will be used later. Alternatively, only a peak value may be stored.

Thereafter, the calculation section 117 calculates PRerror_ttl using the PRerror_ptn(p) for each pattern calculated in step S45 and the occurrence probability of each pattern stored in advance in a memory and stores the calculated PRerror_ttl in the memory 17 (step S47).

Then, the calculation section 117 judges whether or not the PRerror_ttl has exceeded a predetermined threshold (step S49). When the PRerror_ttl is smaller than the predetermined threshold, the process proceeds to step S55 since it is not necessary to adjust the recording conditions. On the other hand, when the PRerror_ttl has exceeded the predetermined threshold, the calculation section 117 performs a recording condition correction amount determining process based on the PRerror_ttl (step S51).

The recording condition correction amount determining process will be described with reference to FIG. 30. First, the calculation section 117 calculates a difference between the amplitude level of an amplitude profile for the particular pattern $p_c$ and, for example, the amplitude level of a reference signal that is identified in step S15 (step S61). As described above, the difference between the peak values may be calculated, or alternatively, differences between values other than the peak values may be added. Since it has been determined in step S49 that the PRerror_ttl has exceeded the predetermined threshold, the difference between the amplitude level and the amplitude level of the reference signal will not be 0 (see FIG. 1).

The calculation section 117 judges whether or not the difference is positive (step S63). If the difference is positive, a recording condition which results in a positive difference and which corresponds to the PRerror_ttl value calculated in step S47 is identified (step S65) from the relationship between the PRerror_ttl and the recording conditions (the result of step S7). In the case shown in FIG. 4, the PRerror_ttl value reaches its smallest at the recording power of 3.3 mW and increases regardless of whether the recording power increases or decreases. Therefore, when the PRerror_ttl value calculated in step S47 is 0.015, for example, the corresponding recording power is about 3.1 mW or about 3.7 mW. The direction and the amount of correction depend on the value of the recording power. If the recording power is 3.1 mW, it should be increased by 0.2 mW. If the recording power is 3.7 mW, it should be decreased by 0.4 mW. Whether the recording power will be increased or decreased is determined by at least one condition among the characteristics of an optical disk under data recording, the recording condition, and the detection pattern. For example, whether an optical disk is an optical disk in which the amplitude level will be increased in response to an increase in the recording power or an optical disk in which the amplitude level will be decreased in response to an increase in the recording power is determined based on a type identification code recorded in advance in the optical disk. For example, when the amplitude level is increased in response to an increase in the recording power, and the difference is positive, it can be judged that the recording power is too high or in the state of being about 3.7 mW. Therefore, the recording power is decreased by about 0.4 mW. On the other hand, when the amplitude level is decreased in response to an increase in the recording power, and the difference is positive, it can be judged that the recording power is too low or in the state of being about 3.1 mW. Therefore, the recording power is increased by about 0.2 mW. Such a determination may be made based on the result of determination which is actually made at the time of test recording instead of the type identification code. Such relationships are identified in advance, and appropriate recording conditions are identified in step S65.

The calculation section 117 calculates the difference between the identified recording condition and the optimal recording condition as a correction amount (step S69), and the process returns to the initial step.

On the other hand, if the difference is negative, a recording condition which corresponds to the PRerror_ttl value calculated in step S47 is identified (step S67) from the relationship between the PRerror_ttl and the recording conditions. For example, when it is judged from the type identification code of the optical disk that the amplitude level is increased in response to an increase in the recording power, and the difference is negative, it can be judged that the recording power is too low or in the state of being about 3.1 mW. Therefore, the recording power is increased by about 0.2 mW. On the other hand, when it is determined from the type identification code of the optical disk that the amplitude level is decreased in response to an increase in the recording power, and the difference is negative, it can be judged that the recording power is too high or in the state of being about 3.7 mW. Therefore, the recording power is decreased by about 0.4 mW. Such relationships are identified in advance, and appropriate recording conditions are identified in step S67. Then, the process proceeds to step S69.

Returning to FIG. 29, the calculation section 117 sets the correction amount for the recording condition determined in step S51 in the recording waveform generation unit 13 (step S53). Then, it is judged whether or not data recording has been completed (step S55), and the process returns to step S41 if data recording has not been completed. On the other hand, if data recording has been completed, the process ends.

By performing the above-described process, it is possible to adjust the recording conditions even during data recording.

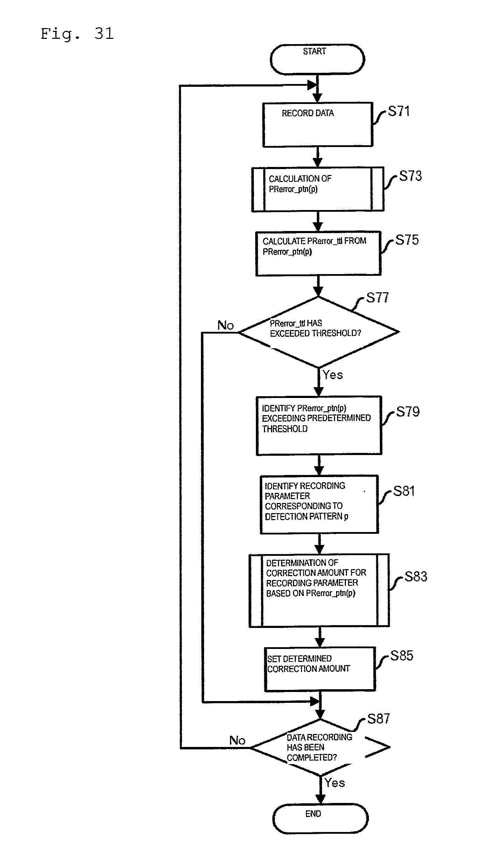

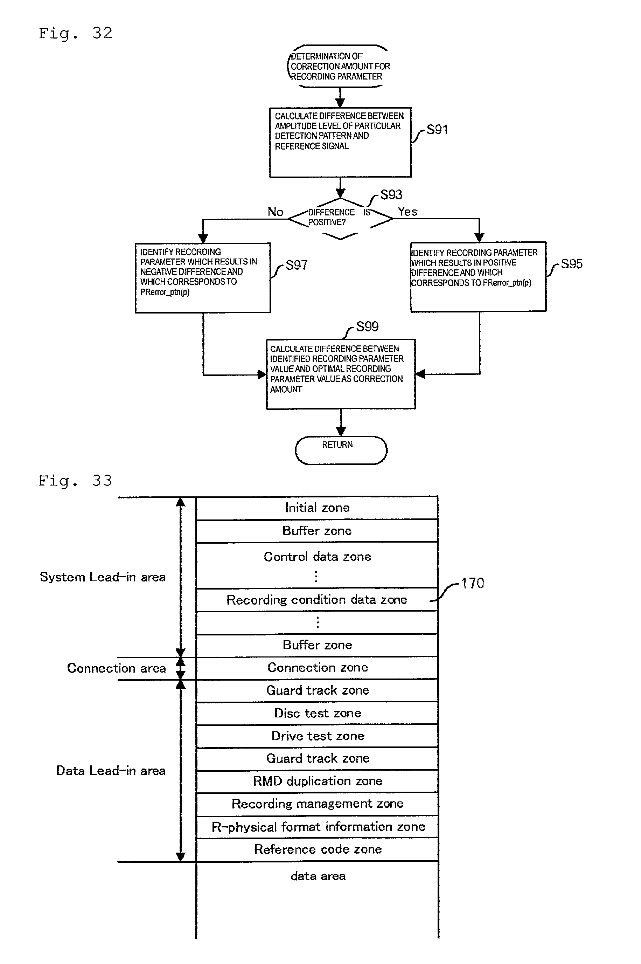

Next, a process of correcting the recording parameter based on the PRerror_ptn(p) will be described with reference to FIGs. 31 and 32.

The recording waveform generation unit 13 writes data to be written using the PU 1 in accordance with recording conditions set therein (FIG. 31: step S71). Here, it will be assumed that data are written in a predetermined amount or for a predetermined period of time. Next, a PRerror_ptn(p) calculation process is performed (step S73). As for this process, the process shown in FIG. 27 is performed. The PRerror_ptn(p) for each detection pattern is calculated and stored in the memory 17. As described above, since the pattern p is detected many times, an average value of PRerror_ptn(p) values is calculated. Moreover, the calculation section 117 stores the amplitude level of a particular pattern $p_c$ which will be used later. Alternatively, only the peak value of the amplitude level may be stored.

Thereafter, the calculation section 117 calculates PRerror_ttl using the PRerror_ptn(p) calculated for each pattern in step S73 and the occurrence probability of each pattern stored in advance in a memory and stores the PRerror_ttl in a storage device such as a memory (step S75).

Then, the calculation section 117 judges whether or not the PRerror_ttl has exceeded a predetermined threshold (step S77). When the PRerror_ttl is smaller than the predetermined threshold, the process proceeds to step S87 since it is not necessary to adjust the recording conditions. On the other hand, when the PRerror_ttl has exceeded the predetermined threshold, the calculation section 117 identifies PRerror_ptn(p) which has exceeded a predetermined threshold (step S79). Alternatively, a predetermined number of the upper PRerror_ptn(p) values may be identified instead of identifying the PRerror_ptn(p) which has exceeded the predetermined threshold. Then, the recording parameters corresponding to the pattern p correlated with the identified PRerror_ptn(p) values are identified (step S81). For example, in the case of a pattern having a 2T space followed by a 2T mark, the pattern may be stored in advance in a memory in correlation with the pattern ID such as dTtop2T, and such correlation may be used for the identification.

Then, the calculation section 117 performs a recording parameter correction amount determining process based on the PRerror_ptn(p) (step S83).

The recording parameter correction amount determining process will be described with reference to FIG. 32. First, the calculation section 117 calculates a difference between the amplitude level of the particular pattern $p_c$ and the amplitude level of, for example, a reference signal that is identified in step S33 (step S91). As described above, the difference between the peak values may be calculated, or alternatively, differences between values other than the peak values may be added. Since it has been determined in step S77 that the PRerror_ttl has exceeded the predetermined threshold, the difference between the amplitude level and the reference signal will not be 0.

The calculation section 117 judges whether or not the difference is positive (step S93). If the difference is positive, the value of a recording parameter which results in a positive difference and which corresponds to the PRerror_ptn(p) value identified in step S79 is identified (step S95) from the relationship between the PRerror_ptn(p) and the recording parameters (the result of step S25). In the case shown in FIG. 24, the PRerror_ptn(p) value reaches its smallest at the dTtop2T of about 0 and increases regardless of whether the dTtop2T decreases or increases. Therefore, when the PRerror_ptn(p) value calculated in step S73 is 0.005, for example, the corresponding dTtop2T is about -1 or about 0.95. The direction and the amount of correction depend on the value of the dTtop2T. If the dTtop2T is -1, it should be increased by 1. If the dTtop2T is 0.95, it should be decreased by 0.95. Whether the dTtop2T will be increased or decreased is determined by at least one condition among the characteristics of an optical disk under data recording, the recording condition, and the detection pattern. The characteristics of the optical disk are preferably determined as follows. For example, the amplitude level of a pattern p is stored for each value of the recording parameter in step S25. It is determined whether the amplitude level increases or decreases in response to an increase in the recording parameter by executing step S25 several times, and the determination results are used. For example, when it is judged from the determination results that the amplitude level is increased in response to an increase in the dTtop2T, and the difference is positive, it can be judged that the dTtop2T is too large or in the state of being 0.95. Therefore, the dTtop2T is decreased by 0.95. On the other hand, when it is judged from the determination results that the amplitude level is decreased in response to an increase in the dTtop2T, and the difference is positive, it can be judged that the dTtop2T is too small or in the state of being about -1. Therefore, the dTtop2T is increased by 1. Such relationships are identified in advance, and appropriate recording conditions are identified in step S95.

The calculation section 117 calculates the difference between the identified recording parameter value and the optimal recording parameter value as a correction amount (step S99), and the process returns to the initial step.

On the other hand, if the difference is negative, a recording parameter value which results in a negative difference and which corresponds to the value of the PRerror_ptn(p) is identified (step S97) from the relationship between the PRerror_ptn(p) and the recording parameters. For example, when it is judged from the results of the advance determination that the amplitude level is increased in response to an increase in the dTtop2T and the difference is negative, it can be judged that the dTtop2T is too small or in the state of being about -1. Therefore, the dTtop2T is increased by about 0.9. On the other hand, when it is judged from the results of the advance determination that the amplitude level is decreased in response to an increase in the dTtop2T and the difference is negative, it can be judged that the dTtop2T is too high or in the state of being about 0.7. Therefore, the dTtop2T is decreased by about 0.8. Such relationships are identified in advance, and appropriate recording conditions are identified in step S97. Then, the process proceeds to step S99.

Returning to FIG. 31, the calculation section 117 sets the correction amount for the recording parameter determined in step S83 in the recording waveform generation unit 13 (step S85). Then, it is judged whether or not data recording has been completed (step S87), and the process returns to step S71 if data recording has not been completed. On the other hand, if data recording has been completed, the process ends.

By performing the above-described process, it is possible to adjust the recording parameters even during data recording.

While it has been described for an example in which the value of the reference signal in the processing flows shown in FIG. 30 or 32 and the relationship between the PRerror_ttl and the recording conditions and the relationship between the PRerror_ptn(p) and the recording parameters shown in FIGs. 4 and 24 are acquired through the processing flow shown in FIG. 26 or 28, such values or relationships may be stored in a memory in advance. When the optical recording and reproducing system is connected to a network, such data may be acquired from another computer storing the data. Further, the processing flow shown in FIG. 26 or 28 may include a step for correcting or updating data stored in a memory in advance.

Moreover, although FIG. 30 or 32 shows a case in which data recording is temporarily interrupted, the recording conditions or the recording parameters may be adjusted concurrently with data recording.

Furthermore, although FIGs. 26 and 28 show examples in which data are reproduced after the data are recorded in accordance with one recording condition and the data are reproduced again after the data are recorded in accordance with another recording condition, data may be reproduced after the data are recorded in accordance with all recording conditions.

Other processing flows may be modified as necessary.

Although the embodiments of the present invention have been described above, the present invention is not limited to the embodiments. For example, the functional block diagram of the optical recording and reproducing system shown in FIG. 25 is merely an example, and the present invention is not limited to the configuration of functional blocks shown in FIG. 25 as long as the above-described functions can be realized.

In addition, although the above description has been made on an example in which the dTtop2T is adjusted, if it is necessary to adjust a trailing space conversely, a parameter Tlp of a trailing edge of a recording pulse may be adjusted. In this way, an appropriate recording parameter is identified and adjusted in accordance with a detection pattern.

Although in the above embodiments have been described for an example in which reference data such as thresholds used for adjusting the recording conditions or the like during data recording are stored in a memory incorporated in the calculation section 117 or an external memory connected to the calculation section 117, it is not always necessary to store such data in a memory. For example, the data may be stored in the optical disk 15. When the data are stored in the optical disk 15, the data may be stored in a lead-in region as shown in FIG. 33. The lead-in region is roughly divided into a system lead-in area, a connection area, and a data Lead-in area. The system lead-in area includes an initial zone, a buffer zone, a control data zone, and another buffer zone. The connection area includes a connection zone. The data lead-in area includes a guard track zone, a disk test zone, a drive test zone, another guard track zone, an RMD duplication zone, a recording management zone, an R-physical format information zone, and a reference code zone. In the present embodiment, the control data zone of the system lead-in area includes a recording condition data zone 170.

The reference data to be stored in a memory are stored in the recording condition data zone 170 and are read at an appropriate time. Regarding the values to be recorded, the average values of the optical disk 15 may be stored. Alternatively, values measured by tests performed on the optical disk 15 prior to shipment may be registered.

By storing the values corresponding to the optical disk 15, on which recording is to be performed, in the optical disk 15, processing loads on the drive side can be reduced. The values stored in the optical disk 15 may be corrected and used if necessary.

By setting the values calculated in the above-described manner to a processor performing Viterbi decoding, a reduction in the symbol error rate of symbol identification during later reproduction is expected.

**Claims**

1. A method of evaluating data recording, comprising the steps of:

    reproducing data recorded on an optical disk and detecting a predetermined pattern from the reproduced signal;
    detecting a signal condition of said reproduced signal that corresponds to said predetermined pattern; and
    a first calculation step of calculating a first recording state evaluation index value based on said detected signal condition and a reference condition, which is specified by said predetermined pattern and adjusted to reflect said signal condition.

2. The method of evaluating data recording according to claim 1, wherein there is a plurality of said predetermined patterns, and the method further comprises a second calculation step of calculating a second recording state evaluation index value using said first recording state evaluation index value for each of said predetermined patterns.

3. The method of evaluating data recording according to claim 2, further comprising a first modification step of modifying a data recording condition for data recording based on said second recording state evaluation index value.

4. The method of evaluating data recording according to claim 2, wherein said second calculation step includes the step of calculating, for each of said predetermined patterns, a product of an occurrence probability and said first recording state evaluation index, and calculating a total sum of each of said calculated products to calculate said second recording state evaluation index value.

5. The method of evaluating data recording according to claim 2, further comprising the steps of:

    judging whether or not the second recording state evaluation index value has exceeded a predetermined threshold; and
    identifying said predetermined pattern that has a predetermined or greater influence level on the second recording state evaluation index value based on the corresponding first recording state evaluation index value when the second recording state evaluation index value has exceeded the predetermined threshold.

6. The method of evaluating data recording according to claim 5, further comprising a second modification step of modifying a recoding parameter used for data recording based on said first recording state evaluation index value relating to said identified pattern.

7. The method of evaluating data recording according to claim 1, wherein said predetermined pattern is composed of at least one mark and one space.

8. The method of evaluating data recording according to claim 1, wherein said predetermined pattern is a pattern an occurrence probability of which exceeds a predetermined value.

9. The method of evaluating data recording according to claim 3, wherein said first modification step includes the step of specifying said recording condition under which said second recording state evaluation index value assumes a most preferable value, based on a relation between recording conditions and said second recording state evaluation index value calculated based on the condition of a signal obtained by reproduction of data recorded under said recording conditions.

10. The method of evaluating data recording according to claim 3, wherein said second modification step includes the step of calculating a modification amount of the recording condition at a point in time, using a relation between recording conditions and said second recording state evaluation index value calculated based on the condition of a signal obtained by reproduction of data recorded under said recording conditions and using said second recording state evaluation index value at said point in time.

**11.** The method of evaluating data recording according to claim 9, wherein a relation between said recording conditions and said second recording state evaluation index value calculated based on the condition of a signal obtained by reproduction of data recorded under said recording conditions corresponds to data obtained at a time of a test recording.

**12.** The method of evaluating data recording according to claim 6, wherein said second modification step includes the step of specifying said recording parameter under which said first recording state evaluation index value assumes a most preferable value, based on a relation between the recording condition and said first recording state evaluation index value calculated based on the condition of a signal obtained by reproduction of data recorded under said recording condition.

**13.** The method of evaluating data recording according to claim 6, wherein said second modification step includes the step of calculating a modification amount for the recording parameter at a point in time, using a relation between recording parameters and said first recording state evaluation index value calculated based on the condition of a signal obtained by reproduction of data recorded with said recording parameters and using said first recording state evaluation index value at said point in time.

**14.** The method of evaluating data recording according to claim 12, wherein a relation between recording parameters and said first recording state evaluation index value calculated based on the condition of a signal obtained by reproduction of data recorded with said recording parameters corresponds to data obtained at a time of a test recording.

**15.** The method of evaluating data recording according to claim 1, wherein said first calculation step includes the step of calculating an amount of a difference between the detected signal condition and a reference condition, which is specified by said predetermined pattern and adjusted to reflect said signal condition.

**16.** The method of evaluating data recording according to claim 1, wherein said first calculation step includes:

the step of setting each level of target levels based on the signal condition of said reproduced signal;
the step of adjusting said reference condition specified by said predetermined pattern in accordance with adaptive changes in said target levels; and
the step of calculating an amount of a difference between said signal condition detected and said reference condition.

**17.** A recording and reproduction device for optical disk, comprising:

means for reproducing data recorded on an optical disk and detecting a predetermined pattern from the reproduced signal;
means for detecting a signal condition of said reproduced signal that corresponds to said predetermined pattern; and
means for calculating a first recording state evaluation index value based on said detected signal condition and a reference condition, which is specified by said predetermined pattern and adjusted to reflect the signal condition of said reproduced signal.

**18.** The recording and reproduction device for optical disk according to claim 17, wherein there is a plurality of said predetermined patterns, and the device further comprises second calculation means for calculating a second recording state evaluation index value using said first recording state evaluation index value for each of said predetermined patterns.

**19.** The recording and reproduction device for optical disk according to claim 18, further comprising first modification means for modifying a data recording condition for data recording based on said second recording state evaluation index value.

**20.** The recording and reproduction device for optical disk according to claim 18, wherein said second calculation means calculates, for each of said predetermined patterns, a product of an occurrence probability and said first recording state evaluation index, and calculates a total sum of each of said calculated products to calculate said second recording state evaluation index value.

**21.** The recording and reproduction device for optical disk according to claim 18, further comprising:

means for judging whether or not the second recording state evaluation index value has exceeded a predetermined threshold; and
means for identifying said predetermined pattern that has a predetermined or greater influence level on the second recording state evaluation index value based on the corresponding first recording state evaluation index value when the second recording state evaluation index value has exceeded the predetermined threshold.

**22.** The recording and reproduction device for optical disk according to claim 21, further comprising second modification means for modifying a recoding parameter used for data recording based on said first recording state evaluation index value relating to said identified pattern.

**23.** A program for causing a processor to execute the method of evaluating data recording as set forth in any one of claims 1-16.

**24.** A processor including a memory storing the program as set forth in claim 23 therein.

**25.** An optical information recording medium storing a threshold value for a second recording state evaluation index value that is calculated by:

calculating a product of a first recording state evaluation index value and an occurrence probability of a predetermined pattern, said first recording state evaluation index corresponding to a difference between signal condition of a reproduced signal that corresponds to said predetermine pattern and a reference condition that is specified by said predetermined pattern and adjusted to reflect the signal condition of said reproduced signal; and
calculating a total sum of said calculated products.

**26.** An optical information recording medium storing data representing a relation between a second recording state evaluation index value and recording conditions for data from which the second recording state evaluation index value is calculated, the second recording state evaluation index value being calculated by:

calculating a product of a first recording state evaluation index value and an occurrence probability of a predetermined pattern, said first recording state evaluation index corresponding to a difference between a signal condition of a reproduced signal that corresponds to said predetermine pattern and a reference condition that is specified by said predetermined pattern and adjusted to reflect the signal condition of said reproduced signal; and
calculating a total sum of said calculated products.

**27.** An optical information recording medium storing data representing a relation between a recording state evaluation index value and recording parameters for data from which the recording state evaluation index value is calculated, the recording state evaluation index corresponding to a difference between a signal condition of a reproduced signal that corresponds to a predetermine pattern and a reference condition that is specified by said predetermined pattern and adjusted to reflect the signal condition of said reproduced signal.

Fig. 1

Fig. 2

Fig. 3

Fig. 4

Fig. 5

Fig. 6

Fig. 7

⟨Pit_f⟩

PRerror_ptn

0.025
0.020
0.015
0.010
0.005
0.000

2 3 4 5 6 7 8 9

ADJACENT SYMBOL[T]

9 8 7 6 5 4 3 2

MAIN SYMBOL [T]

Fig. 15

⟨Pit_f⟩

PRerror_ptn

0.025
0.020
0.015
0.010
0.005
0.000

2 3 4 5 6 7 8 9

ADJACENT SYMBOL·[T]

9 8 7 6 5 4 3 2

MAIN SYMBOL [T]

Fig. 8

Fig. 16

Fig. 9

Fig. 17

Fig. 10

⟨Land_r⟩

Fig. 18

⟨Land_r⟩

Fig. 11

PR(1,2,2,1)

Fig. 12

| TARGET LEVEL | |
|---|---|
| REFERENCE VALUE | AFTER ADJUSTMENT |
| 6 | 6 |
| 5 | 4.222 |
| 4 | 3.511 |
| 3 | 2.858 |
| 2 | 2.205 |
| 1 | 1.570 |
| 0 | 0 |

Fig. 13

REPRODUCTION SIGNAL DETECTION RESULT

Fig. 14

START.

GENERATE REPRODUCTION
SIGNAL — S101

WAVEFORM EQUALIZATION — S103

DETECT PEAK LEVEL OF
PREDETERMINED SYMBOL — S105

DETERMINE AND SET TARGET LEVEL
BASED ON RELATIVE RELATIONSHIP
OF DETECTED PEAK LEVELS — S107

END

Fig. 19

Fig. 20

Fig. 21

Fig. 22

⟨Pit_f⟩

PRerror_ptn

0.025
0.020
0.015
0.010
0.005
0.000

ADJACENT SYMBOL [T]

MAIN SYMBOL [T]

Fig. 23

⟨Pit_f⟩

PRerror_ptn

0.025
0.020
0.015
0.010
0.005
0.000

ADJACENT SYMBOL [T]

MAIN SYMBOL [T]

31

Fig. 24

Fig. 25

Fig. 26

```
                    ( START )
                        │
        ┌───────────────┤
        │               ▼
        │      ┌──────────────────────┐
        │      │ SET RECORDING CONDITION│  ⌐S1
        │      └──────────────────────┘
        │               │
        │               ▼
        │      ┌──────────────────────┐
        │      │     RECORD DATA       │  ⌐S3
        │      └──────────────────────┘
        │               │
        │               ▼
        │    ‖┌──────────────────────┐‖
        │    ‖│ CALCULATION OF PRerror_ptn(p)│‖  ⌐S5
        │    ‖└──────────────────────┘‖
        │               │
        │               ▼
        │      ┌──────────────────────┐
        │      │ CALCULATE  AND  STORE │  ⌐S7
        │      │ PRerror_ttl FROM PRerror_ptn(p)│
        │      └──────────────────────┘
        │               │
        │               ▼
        │              ╱ ╲                ⌐S9
        │             ╱   ╲
        │  No        ╱SETTING OF╲
        └──────────◄  RECORDING  ►
                    ╲CONDITION HAS BEEN╱
                     ╲COMPLETED?╱
                       ╲   ╱
                        ▼ Yes
              ┌──────────────────────┐
              │ IDENTIFY OPTIMAL RECORDING │  ⌐S11
              │ CONDITION BASED ON PRerror_ttl│
              │ FOR EACH RECORDING CONDITION│
              └──────────────────────┘
                        │
                        ▼
              ┌──────────────────────┐
              │ SET OPTIMAL RECORDING │  ⌐S13
              │ CONDITION             │
              └──────────────────────┘
                        │
                        ▼
              ┌──────────────────────┐
              │ RECORD AMPLITUDE LEVEL OF PARTICULAR│
              │ RECORD PATTERN UNDER OPTIMAL│  ⌐S15
              │ RECORDING CONDITION AS REFERENCE│
              │ SIGNAL                │
              └──────────────────────┘
                        │
                        ▼
                    (  END  )
```

Fig. 27

```
┌─────────────────────┐
│   CALCULATION OF     │
│   PRerror_ptn(p)     │
└─────────────────────┘
          │
          ▼
┌─────────────────────┐  S501
│   REPRODUCTION      │
└─────────────────────┘
          │
          ▼
┌─────────────────────┐  S503
│ ADAPTIVELY CHANGE   │
│ TARGET LEVEL        │
└─────────────────────┘
          │
          ▼
┌──────────────────────────┐  S505
│ CALCULATE PRerror_ptn(p) IN│
│ ACCORDANCE WITH EACH       │
│ DETECTION PATTERN          │
└──────────────────────────┘
          │
          ▼
┌─────────────────────┐
│      RETURN         │
└─────────────────────┘
```

Fig. 28

```
┌─────────────┐
│    START    │
└─────────────┘
       │
       ▼
┌─────────────────┐  S21
│ SET RECORDING   │
│ PARAMETER       │
└─────────────────┘
       │
       ▼
┌─────────────────┐  S23
│ RECORD DATA     │
└─────────────────┘
       │
       ▼
┌─────────────────┐  S25
│ CALCULATION OF  │
│ PRerror_ptn(p)  │
└─────────────────┘
       │
       ▼
      ╱╲  S27
No ╱ SETTING OF RECORDING ╲
◄─◄  PARAMETER HAS BEEN    ╲
     ╲ COMPLETED?         ╱
      ╲╱
       │ Yes
       ▼
┌──────────────────────────┐  S29
│ IDENTIFY OPTIMAL VALUE OF │
│ RECORDING PARAMETER BASED │
│ ON PRerror_ptn(p) FOR EACH│
│ RECORDING PARAMETER VALUE │
└──────────────────────────┘
       │
       ▼
┌─────────────────┐  S31
│ SET IDENTIFIED  │
│ OPTIMAL VALUE   │
└─────────────────┘
       │
       ▼
┌──────────────────────────┐  S33
│ RECORD AMPLITUDE LEVEL OF │
│ PARTICULAR DETECTION      │
│ PATTERN CORRESPONDING TO  │
│ OPTIMAL VALUE AS          │
│ REFERENCE SIGNAL          │
└──────────────────────────┘
       │
       ▼
┌─────────────┐
│     END     │
└─────────────┘
```

Fig. 29

START

RECORD DATA — S41

CALCULATION OF
PRerror_ptn(p) — S45

CALCULATE PRerror_ttl
FROM PRerror_ptn(p) — S47

PRerror_ttl HAS
EXCEEDED
THRESHOLD? — S49

No

Yes

DETERMINATION OF
CORRECTION AMOUNT FOR
RECORDING CONDITION
BASED ON PRerror_ttl — S51

SET DETERMINED
CORRECTION AMOUNT FOR
RECORDING CONDITION — S53

DATA RECORDING
HAS BEEN
COMPLETED? — S55

No

Yes

END

Fig. 30

DETERMINATION OF
CORRECTION AMOUNT FOR
RECORDING CONDITION

CALCULATE DIFFERENCE
BETWEEN AMPLITUDE LEVEL
OF PARTICULAR DETECTION
PATTERN AND REFERENCE
SIGNAL — S61

DIFFERENCE IS
POSITIVE? — S63

No

Yes

IDENTIFY RECORDING CONDITION
WHICH RESULTS IN NEGATIVE
DIFFERENCE AND WHICH
CORRESPONDS TO PRerror_ttl — S67

IDENTIFY RECORDING CONDITION
WHICH RESULTS IN POSITIVE
DIFFERENCE AND WHICH
CORRESPONDS TO PRerror_ttl — S65

CALCULATE DIFFERENCE BETWEEN
IDENTIFIED RECORDING CONDITION
AND OPTIMAL RECORDING CONDITION
AS CORRECTION AMOUNT — S69

RETURN

Fig. 31

```
                    ( START )
                        │
                        ▼
              ┌─────────────────┐
              │  RECORD DATA    │─── S71
              └─────────────────┘
                        │
                        ▼
             ║┌────────────────┐║
             ║│ CALCULATION OF │║─── S73
             ║│ PRerror_ptn(p) │║
             ║└────────────────┘║
                        │
                        ▼
              ┌──────────────────────┐
              │ CALCULATE PRerror_ttl│─── S75
              │ FROM PRerror_ptn(p)  │
              └──────────────────────┘
                        │
                        ▼
                    ◇ S77
        No       ╱ PRerror_ttl HAS ╲
     ◄──────────  EXCEEDED THRESHOLD? 
              │   ╲               ╱
              │        │ Yes
              │        ▼
              │  ┌──────────────────────┐
              │  │ IDENTIFY PRerror_ptn(p)│─── S79
              │  │ EXCEEDING PREDETERMINED│
              │  │ THRESHOLD             │
              │  └──────────────────────┘
              │        │
              │        ▼
              │  ┌──────────────────────┐
              │  │ IDENTIFY RECORDING    │─── S81
              │  │ PARAMETER             │
              │  │ CORRESPONDING TO      │
              │  │ DETECTION PATTERN p   │
              │  └──────────────────────┘
              │        │
              │        ▼
              │ ║┌──────────────────────┐║
              │ ║│ DETERMINATION OF      │║─── S83
              │ ║│ CORRECTION AMOUNT FOR │║
              │ ║│ RECORDING PARAMETER   │║
              │ ║│ BASED ON PRerror_ptn(p)│║
              │ ║└──────────────────────┘║
              │        │
              │        ▼
              │  ┌──────────────────────┐
              │  │ SET DETERMINED        │─── S85
              │  │ CORRECTION AMOUNT     │
              │  └──────────────────────┘
              │        │
              │        ▼
              │     ◇ S87
        No    │  ╱ DATA RECORDING ╲
     ◄────────── HAS BEEN
              │  ╲ COMPLETED?    ╱
              │        │ Yes
              │        ▼
              │    ( END )
```

Fig. 32

```
      ╭────────────────────╮
      │ DETERMINATION OF    │
      │ CORRECTION AMOUNT FOR│
      │ RECORDING PARAMETER │
      ╰────────────────────╯
                │
                ▼
   ┌────────────────────────────┐
   │ CALCULATE DIFFERENCE BETWEEN│
   │ AMPLITUDE LEVEL OF PARTICULAR│  ─ S91
   │ DETECTION PATTERN AND       │
   │ REFERENCE SIGNAL            │
   └────────────────────────────┘
                │
                ▼
              ╱─── S93
      No  ╱ DIFFERENCE   IS ╲ Yes
   ◄─────◄    POSITIVE?      ►─────►
          ╲                ╱
```

| IDENTIFY RECORDING PARAMETER WHICH RESULTS IN NEGATIVE DIFFERENCE AND WHICH CORRESPONDS TO PRerror_ptn(p) ─ S97 | IDENTIFY RECORDING PARAMETER WHICH RESULTS IN POSITIVE DIFFERENCE AND WHICH CORRESPONDS TO PRerror_ptn(p) ─ S95 |

```
            ┌──────────────────────────┐
            │          ─ S99           │
            │ CALCULATE DIFFERENCE BETWEEN│
            │ IDENTIFIED RECORDING PARAMETER│
            │ VALUE AND OPTIMAL RECORDING │
            │ PARAMETER VALUE AS CORRECTION│
            │ AMOUNT                     │
            └──────────────────────────┘
                        │
                        ▼
                   ╭─────────╮
                   │ RETURN  │
                   ╰─────────╯
```

Fig. 33

| | Initial zone |
|---|---|
| **System Lead-in area** | Buffer zone |
| | Control data zone |
| | ⋮ |
| | Recording condition data zone ─ 170 |
| | ⋮ |
| | Buffer zone |
| **Connection area** | Connection zone |
| | Guard track zone |
| | Disc test zone |
| | Drive test zone |
| **Data Lead-in area** | Guard track zone |
| | RMD duplication zone |
| | Recording management zone |
| | R-physical format information zone |
| | Reference code zone |
| | data area |

## INTERNATIONAL SEARCH REPORT

| | International application No. |
|---|---|
| | PCT/JP2009/056848 |

A. CLASSIFICATION OF SUBJECT MATTER
*G11B7/0045*(2006.01)i, *G11B7/004*(2006.01)i, *G11B7/125*(2006.01)i

According to International Patent Classification (IPC) or to both national classification and IPC

B. FIELDS SEARCHED

Minimum documentation searched (classification system followed by classification symbols)
G11B7/00-7/013, G11B7/12-7/22

Documentation searched other than minimum documentation to the extent that such documents are included in the fields searched

| Jitsuyo Shinan Koho | 1922-1996 | Jitsuyo Shinan Toroku Koho | 1996-2009 |
|---|---|---|---|
| Kokai Jitsuyo Shinan Koho | 1971-2009 | Toroku Jitsuyo Shinan Koho | 1994-2009 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2007-323781 A  (Taiyo Yuden Co., Ltd.), 13 December, 2007 (13.12.07), Par. Nos. [0025] to [0048], [0260] to [0294]; Figs. 55 to 62 & US 2007/0291604 A1 | 1-27 |
| Y | JP 2007-242149 A  (Taiyo Yuden Co., Ltd.), 20 September, 2007 (20.09.07), Full text; Figs. 1 to 13 (Family: none) | 2-6,9-14, 18-22 |
| Y | JP 2005-267759 A  (Sanyo Electric Co., Ltd.), 29 September, 2005 (29.09.05), Full text; Figs. 1 to 9 (Family: none) | 1-27 |

[X] Further documents are listed in the continuation of Box C.　　[ ] See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered   to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| 19 June, 2009 (19.06.09) | 30 June, 2009 (30.06.09) |

| Name and mailing address of the ISA/ | Authorized officer |
|---|---|
| Japanese Patent Office | |
| Facsimile No. | Telephone No. |

Form PCT/ISA/210 (second sheet) (April 2007)

<table>
<tr><td colspan="2" align="center"><strong>INTERNATIONAL SEARCH REPORT</strong></td><td>International application No.<br>PCT/JP2009/056848</td></tr>
</table>

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2005-346897 A  (Hitachi, Ltd.),<br>15 December, 2005 (15.12.05),<br>Full text; Figs. 1 to 64<br>& US 2005/0249318 A1      & US 2009/0052595 A<br>& KR 10-2006-0042873 A   & CN 1694169 A | 1-27 |
| Y | JP 2001-186027 A  (Victor Company Of Japan, Ltd.),<br>06 July, 2001 (06.07.01),<br>Full text; Figs. 1 to 11<br>& US 2002/0013927 A1 | 1-27 |
| P,A | JP 2008-165863 A  (Taiyo Yuden Co., Ltd.),<br>17 July, 2008 (17.07.08),<br>Full text; Figs. 1 to 22<br>& US 2008/0205221 A1      & EP 1942498 A2<br>& KR 10-2008-0061278 A   & CN 101211587 A | 1-27 |

Form PCT/ISA/210 (continuation of second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003151219 A
- JP 2003141823 A
- JP 2002197660 A

- JP 2005267759 A
- JP 2005346897 A

**Non-patent literature cited in the description**

- Conference title 2002 International Symposium on Optical Data Topical Meeting. *Joint International Symposium Technical Digest,* 269-271